# EUROPEAN PATENT APPLICATION

(11) **EP 3 779 845 A1**
(43) Date of publication of application: **17.02.2021**
(21) Application number: 20000200.4
(22) Date of filing: 25.01.2011
(51) Int. Cl.: G06Q 30/08, G06Q 10/06, G06Q 40/04

(54) **A TRADING APPARATUS AND METHOD**

(30) Priority: 26.01.2010 US 29854210 P
(62) Divisional of application: 11737531.1
(71) Applicant: Macri Lassus, Patricia, Palo Alto, CA 94301 (US)
(72) Inventor: Macri Lassus, Patricia, Palo Alto, CA 94301 (US)
(74) Representative: Glawe, Delfs, Moll

(57) **Abstract**

A trading apparatus including an order receiver, an order storage module, a trade generator and a reporting module. The order receiver receives orders from at least one trader, wherein the orders include at least one complex order. The order storage module stores the orders. The trade generator generates trades based on the orders and a trading mechanism. The reporting module reports the trades.

## Description

### PRIORITY CLAIMS

This application claims priority to U.S. Provisional Application Number 61/298,542, filed on January 26, 2010 and U.S. Non-provisional Application Number 13/013,611 filed January 25, 2011.

### BACKGROUND

In general, at the bidding stage of auctions (ex-ante), bidders face significant uncertainty about information that they care about. The information affects their valuations for the auction items and/or their optimal bidding strategies for the items, thereby affecting their bids.

Some of this ex-ante unknown, but relevant information includes information that will be realized (and potentially available to the bidders) ex-post, once the auction is run. In the following, bidders are generally referred to as buyers for ease of exposition, but the analogue applies to sellers.

Bidders may, for example, care about features of the overall allocation, in that a bidder's valuation for the goods or set of goods he won may depend on how much total quantity was sold in a multi-unit auction, or on who else won which item in an auction, and at what price. For example, a bidder in a securities auction may care about the total quantity issued because it would likely affect the liquidity of the security in the secondary market. Further, a bidder who has an equivalent of a 20% of market share in a liquidation auction for a retail chain or in a privatization of a retail chain may care about whether the market share of the next largest winner is at most a 5%, or whether the remaining 80% of the market share is split evenly among two other bidders, because winner's market shares would likely affect the kind of competition ensuing in the retail market after the auction was settled.

Bidders may also care about information regarding the clearing conditions of the auction, such as the level of oversubscription, what the average winning bid was in a multi-unit auction, or information about on other statistics of winning and/or losing bids in an auction. For example, the U.S. treasury and other governments routinely publish the average winning bids and other statistics once a treasury auction is run. If bidders could foresee this information, they may choose to bid more aggressively the more an auction is oversubscribed. Additionally or in the alternative, the bidders may adjust their estimate of the value of items that have common values or interdependent values (that is, a bidder's valuation for an item depends at least in part on the value other bidders attach to the item).

Moreover, consider the case in which a number of auctions are held, for example, 3 auctions a day for a given stock. A bidder trying to buy stock that day may care about which of the auctions will be more liquid (in that a large number of sellers will be selling), so that he can minimize his price impact on the clearing price by choosing to bid in that auction which is most liquid.

Bidders know that the amount they bid in auctions will likely affect both their probability of winning an item, as well as, in many auction formats, the price they pay for units won. The uncertainty at the bidding stage may lead bidders to shade bids (that is, bid less aggressively), reduce the quantity or the set of goods they bid on, or refrain from bidding, because they fear ending up paying more than was necessary to win, or overpaying in that the price they pay is above their ex-post estimate of the goods' values.

A well known term capturing the risk of overpaying in the context of common values auctions is the "winner's curse": conditional on winning, a bidder has to adjust his estimate of the value of the object downwards. Anticipating the winner's curse ex-ante, bidders submit less aggressive bids, even more so, if bidders know that their aggressive winning bids also increases the price they paid on units won (for example in a multi-unit auction).

Another related concept is that of "exposure risk". A buyer who wants to buy, for example, a bundle of goods that he considers complements, but who can submit bids for individual goods only, risks being stuck winning only a few rather than all the goods in the bundle, thus winning a set of goods for which his valuation is much lower. As a result, the buyer may refrain from bidding on the items, or reduce the prices he bids. A buyer who bids less aggressively because he risks ending up winning a set of goods when the overall allocation of goods is unfavorable to him, would thus be dealing with a more general version of the exposure risk above.

Bid shading or reduced bidder participation, in turn, may result in suboptimal allocations, including too little volume exchanged or too little revenue generated.

### SUMMARY

This Summary is provided to introduce a selection of concepts in a simplified form that are further described below in the Description of Embodiments. This Summary is not intended to identify key features or essential features of the claimed subject matter, nor Is it intended to be used as an aid in determining the scope of the claimed subject matter.

Various embodiments of the present disclosure, a method for trading, are described. In one embodiment, orders are received from at least one trader, wherein the orders comprise at least one complex order. In one embodiment, the orders are stored. In one embodiment, trades are generated based on the orders and a trading mechanism. In one embodiment, the trades are reported.

Various embodiments of the present disclosure, a trading apparatus, are described. A trading apparatus including an order receiver, an order storage module, a trade generator and a reporting module. The order receiver receives orders from at least one trader, wherein the orders include at least one complex order. The order storage module stores the orders. The trade generator generates trades based on the orders and a trading mechanism. The reporting module reports the trades.

This disclosure generally describes a complex trading mechanism.

### DESCRIPTION OF THE DRAWINGS

Figure 1A is a block diagram of an example system for performing a trading method, in accordance with embodiments of the present technology.
Figure 1B is a block diagram of an example system for performing a trading method, in accordance with embodiments of the present technology.
Figure 1C is a block diagram of an example system for performing a trading method, in accordance with embodiments of the present technology
Figure 2A is a flow diagram of an example method for trading, in accordance with embodiments of the present technology.
Figure 2B is a flow diagram of an example method for trading, in accordance with embodiments of the present technology.
Figure 3 is a block diagram of an example computer system used for trading in accordance with embodiments of the present technology.
Figure 4, is a flow chart of a method for increasing trade volume in a trading mechanism, according to embodiments of the present technology.
Figure 5 is a flow chart of a method for increasing auction revenue in an auction mechanism, according to embodiments of the present technology.
Figure 6 is a flow chart of a method for enhancing revenue in a trading mechanism, according to embodiments of the present technology.
Figure 7 is a method for increasing revenue of a trading mechanism.
Figure 8 is an auction apparatus, according to embodiments of the present technology.
Figure 9 is an auction apparatus, according to embodiments of the present technology.
Figure 10 is an auction apparatus, according to embodiments of the present technology.
Figure 11 is a trading apparatus, according to embodiments of the present technology.

The drawings referred to in this description should not be understood as being drawn to scale unless specifically noted.

### DESCRIPTION OF EMBODIMENTS

Reference will now be made in detail to embodiments of the present technology, examples of which are illustrated in the accompanying drawings. While the technology will be described in conjunction with various embodiment(s), it will be understood that they are not intended to limit the present technology to these embodiments. On the contrary, the present technology is intended to cover alternatives, modifications and equivalents, which may be included within the spirit and scope of the various embodiments as defined by the appended claims.

Furthermore, in the following detailed description, numerous specific details are set forth in order to provide a thorough understanding of the present technology. However, the present technology may be practiced without these specific details. In other instances, well known methods, procedures, components, and circuits have not been described in detail as not to unnecessarily obscure aspects of the present embodiments.

Unless specifically stated otherwise as apparent from the following discussions, it is appreciated that throughout the present detailed description, discussions utilizing terms such as "receiving", "storing", "generating", "reporting", "managing", "communicating", "sending", "comparing", "executing", " "enabling", "utilizing", or the like, refer to the actions and processes of a computer system, or similar electronic computing device. The computer system or similar electronic computing device manipulates and transforms data represented as physical (electronic) quantities within the computer system's registers and memories into other data similarly represented as physical quantities within the computer system memories or registers or other such information storage, transmission, or display devices. The present technology is also well suited to the use of other computer systems such as, for example, optical computers.

The following is a list of definitions for terminology used herein. This document considers trading mechanisms, as well as the subset of auction mechanisms included therein. Moreover, a simple setting and a richer setting are considered.

### General Definitions

*Trading mechanism:* refers to a mechanism employed to generate a trade based on a set of orders, and includes a clearing method as well as other trading rules.

*Clearing method:* Refers to the algorithm used to generate a trade, and includes a trading format, an objective and tie-breaking rules and other rules that may be necessary.

*Auction(s) or auction mechanisms:* That subset of trading mechanisms, for which the trading format used is an auction format. The term auction henceforth includes typical auctions (in which the bidders buy goods), reverse auctions (in which the bidders sell goods), and double auctions (in which bidders buy and sell goods) for one or more goods (that is, including auctions for single goods and auctions for multiple goods, the latter being referred to as multi-unit auctions henceforth).

It should be understood that the description of embodiments of the present technology with respect to using terminology applying to trading mechanisms also applies to auctions (or auction mechanisms). Further, it should be understood that any description using "auction" terminology also applies to trading, unless specifically noted otherwise herein. Thus, for example, the term "order(s)", "bidder" and "trade results" (or "trade" and "trade allocation and transfers") in trading mechanisms would apply to auctions as "bid(s)", "bidder", and "auction allocation and transfers" and vice versa unless specifically noted otherwise. For ease of exposition, auction terminology is used through most of the document.

*Complex auctions or complex auction mechanisms:* Auctions (or auction mechanisms) that allow for complex bids. Complex bids are defined In the Structure section.

*Complex trading mechanisms:* Trading mechanisms that allow for complex orders. Complex orders are defined in the Structure section.

*Goods*, *units, objects, and items:* Are interchangeable, and may refer both to tangible and to intangible goods. Moreover, embodiments of the present technology may be applied to a single good or a plurality of goods. The plurality of goods may be multiple identical and/or dissimilar goods. Identical goods may mean that the items are in fact identical (such as bonds in a specific issuance) or that the bidders consider the goods to be close substitutes.

Finally, throughout this document, reference is made to choices that have to, or can be made about the specific embodiment to be used for a specific application. These choices are up to the auction designer (or mechanism designer), who is likely to be identical with the auctioneer, which is why the terms are used interchangeably in the context of mechanism design choices.

### Simple Setting

*Simple setting:* A setting for running one-time, sealed bid auctions (or trading mechanisms), for which clearing does not require accessing any information that is outside of the auction, and for which no time component is introduced (if present, a time component would allow to distinguish identical bids a bidder may have submitted at different times). This setting is commonly used in auction applications such as treasury auctions, IPO's, real estate auctions, or spectrum auctions.

*Set of admissible bids:* The kind of bids that bidders may submit in the auction. For example, in a multi-unit auction, bidders may be allowed only to express bids stating that they would like to buy up to some number q of shares for up to some price p. If bidders were also allowed to state that they would buy shares only if they win at least some minimum quantity qₘᵢₙ, then the bids with a minimum-quantity-restriction would be a second kind of admissible bid, along with the unconditional bids described first.

The following terms are introduced for the simple setting, and will be augmented further below, for the richer setting.

*Set* of *submitted bids* in the auction: All bids that bidders submit. Some of these bids may be found to be invalid, bidders may cancel bids, or amend their bids.

Set of *auction bids,* or *the set of outstanding, valid bids:* A subset of the submitted bids, namely those submitted bids that are valid and outstanding (have not been cancelled or amended by the bidder) at the clearing stage of the auction.

*Bid information for each individual bid by a bidder i:* Includes what would commonly be understood as the bid (which items the bidder bids on, what prices, and any conditions), as well as the bidder's identity.

*Bid information for bidder i:* Includes the bid information for the collection of bids he submitted and that are valid and outstanding at the clearing stage of the auction.

*Bid information for the auction:* Includes the bid information for each of the participating bidders.

*Bid information excluding bidder i*: Is found by removing bidder i's bid information from the auction bid information.

*Set of items sold and*/*or bought in the auction:* Emerges at the clearing of the auction, from the candidate set of items to be sold and/or bought at the auction (which is known from the beginning of the auction).

*Candidate set of items to be sold and*/*or bought at the auction:* Set of items that may be bought or sold in the auction. In some embodiments or the present technology, the decision as to which items, and/or how many items to buy and/or sell may be made at the clearing stage of the auction (that is, when calculating the auction allocation and transfers, and thus after having collected the bids). For example, the auctioneer may, at the beginning of the auction specify a candidate set of items to be sold by announcing that the quantity of shares to be sold in an auction will be between 1 and 2 million, or that bonds are to be sold with a notional between 1 and 2 billion. At the clearing stage, the auctioneer would then decide on the total quantity sold, based on the submitted bids. Or, the auctioneer may specify a candidate set of auction items sold by announcing that two bonds, A and B, with a combined notional of 2 billion will be auctioned off, and then decide on the split of volume between bond A and B (that is, the set of auction items sold), when clearing the auction. Notice that the difference between the candidate set of items and the set of items that emerges at the clearing naturally exists for double-auctions, as bidders in a double-auction for a stock, for example, know that the stock will be traded (which defines the candidate set), but understand that the total quantity traded (the set of auction items sold or bought) will depend on the bids submitted by the buyers and sellers in the auction.

*Auction allocation*: Denoted as X={Xᵢ,...Xₙ}, specifies, for every participating bidder i, which set of items Xᵢ he bought or sold.

*Auction Transfers:* Denoted as T={Tᵢ,...Tₙ}, specify, for each participating bidder i, which transfers (generally, prices) he paid or received.

*Auction allocation and transfers for bidder i in an auction*: Denoted as Xᵢ and Tᵢ, respectively, refer to the goods the bidder bought or sold and the prices he paid or received in the auction.

*Auction allocation and transfers excluding bidder i*: Denoted as X-Xᵢ and T-Tᵢ, respectively, refer to the auction and allocation and transfers after removing the information about Xᵢ and Tᵢ, that is the item(s) bought or sold and the transfer(s) paid or received by bidder i. For example, if buyer i won items A and B for a price of 5 and 6 in an auction for goods A, B, C, and D, then Xᵢ=(X_{iA},X_{iB},X_{iC},X_{iD})=(1,1,0,0) and Tᵢ=(5,6,0,0). Note that the allocation Xᵢ can be positive or negative, depending on whether the good is sold or bough. Thus Xᵢ =(X_{iA},X_{iB},X_{iC},X_{iD})=(1,-1,0,0) may denote that bidder i bought good A and sold good B. Similarly, the transfers for a specific item do not have to be positive (negative transfers may mean that a bidder sold an object), nor do the transfers have to be zero when a bidder "bought" an item (for example in the case when the auction mechanism is applied in auction-like settings with the purpose of coordination), nor do the transfers have to be monetary units (bidders in an auction may be "paying" with points of which they may have a specific amount). Moreover, the way in which Xᵢ and Tᵢ is specified may depend on what is most convenient: for example, it may be convenient to write Xⱼ=100, Tⱼ=7 for a bidder j who won 100 shares in a securities auction at a per share price of $7.

*intra-auction information:* Refers to information in messages sent by the auctioneer to bidders, or information somehow made public to bidders in the system.

### Richer Setting

*Richer setting:* Augments the simple setting by including time as a variable (in the sense that, for example, the time at which bids are submitted matters), and/or by connecting the trading mechanism to exogenous variables and/or platforms (where exogenous means outside of the trading mechanism). Embodiments tailored to this setting may be applied to create a trading platform, by, for example, running hourly auctions to buy and sell stocks.

Since this setting is richer than the simple setting, all the capabilities of the embodiments of the invention described in the simple setting still exist in the richer setting (the richer setting only adds to the capabilities of possible embodiments of the invention).

In this setting, any bids submitted, and any other information is time-stamped, which makes it necessary to distinguish between current values of variables at time t, and variable's history up to time t (or time t history, in the following), which is defined as the collection of the variable's values from the start of the auction up until time t.

*Intra-auction information at time t*: Refers to information in messages sent by the auctioneer to bidders, or information somehow made public to bidders in the system at time t within the auction.

*History of intra-auction information at time t*: Consists of the collection of intra auction information from the start of the auction until time t

*Intra-auction information for bidder i at time t*: Intra-auction information send to bidder i at time t.

*History of intra-auction information up until time t for bidder l* (or time t history of intra-auction information): The history of Intra-auction *information* for bidder i.

*intra-auction information* at *time t excluding bidder i:* Found by removing the intra-auction information for bidder i at time t, from the collection of bidders' time t intra-auction information.

*History of intra-auction information up* to *time t excluding bidder i*: Found by removing the information in the history of intra-auction information up to time t for bidder i, from the information contained in the *history of intra-auction information up to time* t sent to the collection of bidders.

In the richer setting, the auction mechanisms may allow for bids on auction items to depend on exogenous variables, or for bidders to bid directly on goods bought or sold at exogenous platforms. The term exogenous is meant in the sense of "outside" of the auction. Again, it is important to distinguish between the *time t value of an exogenous variable*, and *the history of values up to time t* (which consists of the collection of values, from the start of the auction until time t). For the case of exogenous trading venues, the time t values may refer to the best prices and the available volume at these prices on the exogenous venue, and the history of the values would again be the collection of the values from start of the auction until time t.

Regarding the auction bids, each individual bid for bidder i in the richer setting includes a time stamp, in addition to what was the case in the simple setting. The set of *valid, outstanding bids from bidder i at time t* consists of all the bids that bidder i submitted from the start of the auction until time t, and which have not expired by time t. Aggregating these bids over all bidders, generates the *set of valid, outstanding bids at time t in the auction.*

*History of bids up to time t for bidder i*: includes all bids submitted by that bidder up until time t, including, for example still valid outstanding bids, and expired bids.

The *history of auction bids up to time t*: Found by aggregating the individual bid histories over all bidders. The *history of auction bids up to time t excluding bidder i,* is then found by subtracting bidder i's history of auction bids.

In some embodiments, the invention is run as a trading platform, meaning that a series of auctions is run over some time interval, such as a day, or an hour. If so, when talking about the histories described above, the *start of the auction* is meant not to refer to the start of the current auction, but rather to refer to the start of the first auction in the sequence that the current auction belongs to. The auction designer exercises discretion over the definition of sequences. For example, if auctions are run hourly in any trading day, with the first auction at 9 am and the last one at 5 pm, a natural definition of a sequence may be the set of auctions run on the same day, which would imply that the start time relevant for the histories considered in a 3 pm auction is the 9 am start time of the first auction that was run on the same day.

If auctions are indeed run in sequences, it is useful to also define the *history of trades up to time t*. This history refers to the information about executed trades (that is, the auction allocations and transfers for auctions that have concluded) from the start time of the sequence of auctions up until the time t. Note that the clearing of the auction may take some time, D, which may matter in high speed trading applications. If so, the history of trades up to time t is meant to include trades that were generated through a clearing process that started at time t (in the sense that it took at inputs the set of valid, outstanding bids at time t). Note that the auctioneer in the present invention has discretion over whether to make none, all, or part of the history of trades available to bidder. In practice, though, regulatory requirements with respect to trade reporting may apply. For example, if a sequence of auctions was held for a stock, regulatory requirements may specify that the price and quantity of each executed trade be reported.

The discussion will begin with a brief overview embodiments of the present technology. The discussion will then focus on embodiments of the present technology that provide an apparatus and method for trading.

### Overview

In general, embodiments of the present technology provide a system and method for a complex trading mechanism in which a participating trader's message space (that is, the set of admissible orders) includes complex orders. In simplified terms, the complex orders include conditions that can be verified only knowing the realization of orders submitted by other traders and/or the trade results in other than only the trade (quantities and prices) assigned to that trader.

For example, a complex order could be conditional on features of the trade results across traders, specifying that the trader wants to buy a specific quantity of items in a multi-unit auction only if the total quantity sold is above some minimum, or the largest quantity held by any other winning trader is below some maximum. A complex order may also include conditions on statistics formed with other traders' winning and/or non-winning bids, allowing traders to bid a certain amount for a given item only if there are at least a minimum number of other bids within a specific range of his bid, or to bid a specific price and quantity in a uniform price multiunit auction only if, on average, over the units he may win, the last winning order were he not to participate in the auction would be lower by at most a specified amount.

The following discussion will begin with a description of the structure of the components of the present technology. The discussion will then be followed by a description of the components in operation.

### Structure

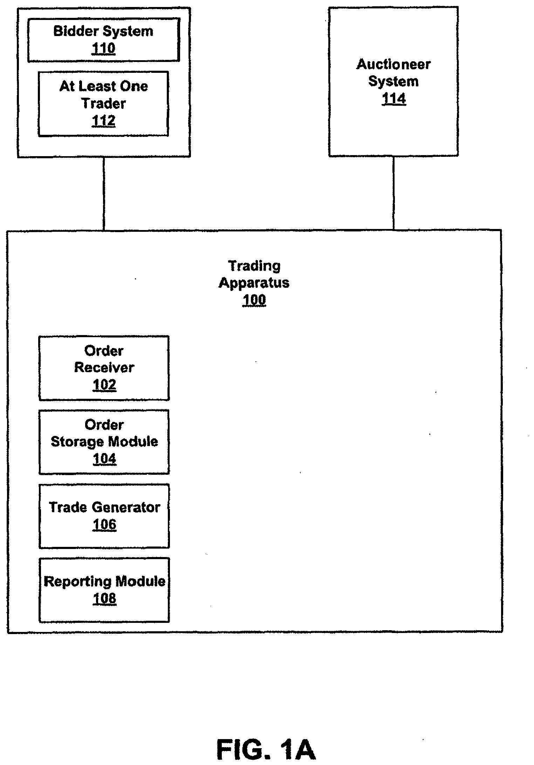

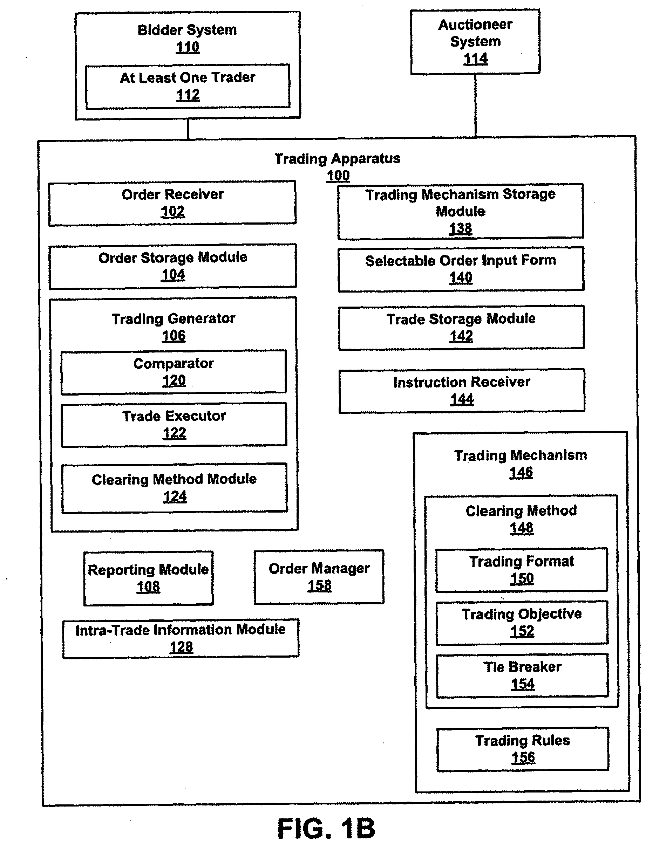

Figures 1A and 1B are each a block diagram of an example trading apparatus as it would be used in the simple setting described below, in accordance with an embodiment of the present technology. Referring now to Figure 1A, the trading apparatus 100 in the present technology includes an order receiver 102, an order storage module 104, a trade generator 106 and a reporting module 108.

In one embodiment, the trading apparatus 100 is coupled via wire and/or wirelessly with an entity participating in an exchange and/or an auction. For example, but not limited to such example, the trading apparatus 100 may be internal or external to an auctioneer's system 114. Further, in one embodiment, the trading apparatus 100 is coupled with a bidder system 110, wired and/or wirelessly. Moreover, one embodiment is coupled with an exogenous variable, such as another trading venue. In one embodiment, the bidder system 110 received bids from bidders.

In one embodiment, the order receiver 102 receives orders from at least one trader. The "orders" include at least one complex order. The order receiver 102, in one embodiment, receives at least one complex order having a condition selected from the group of condition categories consisting of: items bought; items sold; the auction allocation and transfers; statistics derived from information contained in the orders; variables whose calculation requires utilizing at least some information included in the orders; item-less trades; features of orders matched with the at least one complex order; and impact on intra-trade information. It should be noted that the group of condition categories listed above is non-exhaustive.

Moreover, the order receiver 102, in another embodiment, receives at least one complex order having a condition on a variable that captures a concept in the group of concepts consisting of: price impact of an order; auction depth; market depth; liquidity; oversubscription; level of competition; equity; dispersion; supply-demand-imbalance; stability; and momentum.

The order storage module 104 stores the orders, in one embodiment. In one embodiment, the order storage module 104 stores information such as, but not limited to: items in the auction, traders' identities, the traders' passwords, the traders' bids (including both the set of submitted trades, as well as the set of valid, outstanding trades which has been derived from the auction allocation and quantity).

Referring now to Figures 1A and 1B, in one embodiment, the trade generator 106 generates trades based on the orders and a trading mechanism 146. In one embodiment, the trade generator 106 includes a comparator 120 and a trade executor 122. The comparator 120 compares stored orders with a trading mechanism 146, while the trade executor 122 executes the trades based on the comparing of the comparator 120. In another embodiment, the trade generator 106 includes a clearing method module 124 that executes a clearing method 148 (of trading mechanism 146, to be below).

In one embodiment, the reporting module 108 reports the trades. Example items that may be traded are, but are not limited to the following: public sector bonds, private sector bonds; bills; notes; stocks; exchange traded funds; derivatives; options; credit default swaps, variance swaps; commodities; power; oil drilling rights; emission allowances; emission credits; real estate; online advertising spots; patents; spectrum licenses; airport landing spots; data capacity; other tangible goods; and other intangible goods.

In various further embodiments, the trading appartus 100 includes one or more of the following: order manager 158; intra-auction information module 128; trading mechanism storage module 138; selectable order input form 140; trade storage module 142; instruction receiver 144; and trading mechanism 146.

In one embodiment, the order manager 158 manages an event associated with the orders. In one embodiment, the order manager 158 is configured for managing an event associated with the orders selected from the group consisting of: submission of the orders; amendment of the orders; cancelling of the orders; generating a set of valid outstanding orders from the orders; confirming a receipt of the orders; publishing of a portion of the orders; and a trade generated based on the orders. However, it should be understood that the group of events is not exhaustive.

Referring still to Figures 1A and 1B, in one embodiment, the trading apparatus 100 includes an intra-trade *information* module 128. The intra-trade information module 128 reports and generates intra-trade information based the orders and/or trades.

Referring still to Figures 1A and 1B, in one embodiment, the trading apparatus 100 includes a trading mechanism storage module 138. The trading mechanism storage module 138 stores trading mechanisms 146. In one embodiment, the trading mechanism storage module 138 is accessible by the trading generator 106.

In one embodiment, the trading apparatus 100 includes a selectable order input form 140 for being selected by the at least one trader 112. Further, in one embodiment, the selectable order input form is selected from the group of selectable order input forms consisting of: a sentence specifier; a mathematical condition specifier; a function specifier; a range specifier; and a trade objective of the at least one trader 112. However, it should be understood that the group of selectable order input forms is not exhaustive.

Further, formulations are selectable via a selectable order input form that may include but are not limited to the following: selection among a finite set of options, specification of sentences, specification of mathematical conditions, functions, or ranges.

Further, and as will be discussed in depth in the Operation section below, these non-complex conditions may be, but are not limited to the following: pegging conditions; routing conditions; trade-inspired conditions; a minimum execution size; and a bundle condition. In another embodiment, each of the at least one complex order includes: at least one complex condition and at least one condition that is non-complex selected from the group consisting of: pegging conditions; routing conditions; trade-inspired conditions; a minimum execution size; and a bundle condition.

In one embodiment, the trading mechanism storage module 138 stores information about the trading mechanism 146 to be used for running the auction and any intra-trade information.

In one embodiment, the trading apparatus 100 includes a trade storage module 142. The trade storage module 142 stores information associated with the trades. For example but not limited to such example, the trade storage module may store auction allocation and quantity or any additional information that is derived by the trading generator 106 that clears the auction by taking in the relevant information from the trading mechanism 146.

In one embodiment, the trading apparatus 100 includes an instruction receiver 144. The instruction receiver 144 receives trade reporting instructions.

In one embodiment, the trading apparatus 100 operates in at least one round of a dynamic auction. In one embodiment, the trading mechanism 126 includes a clearing method 148. In yet embodiment, the trading mechanism 146 includes at least one trading rule 156. In yet one embodiment, the trading mechanism 146 includes at least one trading rule 156. In one embodiment, the at least one trading rule 156 associated with said trading mechanism is selected from the group consisting of: rules regarding orders; rules regarding monetization; rules regarding a candidate set of items; and rules regarding when to clear a trade. It should be appreciated that the immediate foregoing group is non-exhausting. Further, in one embodiment, the at least one trading rule associated with the trading mechanism may be one of, but not limited to, the following: parameters for specifying admissible conditions of said at least one complex order; parameters for specifying admissible conditions for said non-complex orders; parameters for amending said orders; parameters for cancelling said orders; parameters for publishing a portion of said orders; parameters for specifying timing requirements for submission of said orders; a candidate set of trade items to be traded; a number of participating traders and an identification of said participating traders; a required trading deposit; parameters for specifying an event causing said trade generator to compare said stored orders with said trading mechanism; parameters for specifying an event causing said trade generator to execute said trades; information associated with said trades that is to be communicated to said at least one trader after said trades are generated; communication rules with other trading venues; intra-trade information to be communicated to at least one said trader; parameters specifying communication of information about said trading mechanism to said traders; monetary transfers to occur per execution of said orders; monetary transfers to occur per execution of said orders based on at least one feature of said orders; monetary transfers occurring per execution based on at least one of information that arises when said trades are generated and information that is utilized to generate said trades; and budget balancing rules.

In one embodiment, the clearing method 148 includes at least one of the following: a trading format 150, a trading objective 152 and a tie breaker 154.

In another embodiment, the trading format 150 utilized by the trading apparatus 100 is selected from the group consisting of: a first price auction format; a second price auction format; a first price combinatorial auction format; a second price combinatorial auction format; a discriminatory price auction format; a uniform price auction format; a discriminatory price combinatorial auction format; a uniform price combinatorial auction format; and a combinatorial auction format. It should be understood, however, that the group of trading formats is non exhaustive.

In another embodiment, the optimization of the trading objective 152 involves the consideration of an effect of the generated trades on at least one criterion, the criterion selected from the group consisting of: auctioneer revenue; auctioneer cost; gains from trade; trade volume; maximizing auctioneer revenue; equity; dispersion; and price stability. It should be understood, however, that the group of criteria is non-exhaustive.

### Bids/Orders in a Simple Setting

An embodiments of the present technology is a class of auctions mechanisms, whose most important feature is that bidders can submit a new kind of complex bid. In particular, the auctions in the present invention allow at least one bidder i to submit at least one complex bid, that is, a bid which includes at least one complex condition that is to be met when the auction clears.

A condition included in a bid by bidder i is to be called complex, if it has two of the following characteristics: verifying the condition (a) is not always possible knowing only (1) bidder i's allocation and transfers (Xᵢ,Tᵢ); and (2) bidder i's own bid information (where "not always" means that there exist constellations of bidders and bids submitted, for which verifying the condition is not possible knowing only said information in (a)), and (b) at least some times requires using at least some of the information contained in the auction allocation and transfers excluding bidder i (X-Xᵢ, T-Tᵢ), and/or some information that is contained in or derived from the entirety of auction bid information or parts thereof (where "At least sometimes" means that there exist constellations of bidders and bids submitted for which verifying the condition requires using at least some of said information in b).

The following is a description of admissible bids in the simple setting, starting out with five categories of complex conditions. Of note, more categories of complex conditions may exist in the simple setting. This description of five categories is not mutually exclusive or exhaustive.

The first category of complex conditions are conditions on the set of items sold and/or bought in the auction. These conditions matter, for example, if only a candidate set of goods to be bought or sold is known ex-ante. If so, a) above holds, because a bidder who, for example, won 100,000 shares in a stock auction cannot tell from that number how many shares were sold overall, and thus b) holds because said bidder would have to find out about information regarding the entire allocation in the auction (in this case, the total quantity sold). An example of a complex bid of the first category would be a bid a double-auction, conditional on the total quantity exchanged being at least some amount (since that total quantity depends on the submitted bids to buy or sell and is thus unknown ex-ante), or a bid in a securities auction that included a condition on the total quantity sold or issued (as long as the total quantity was not fixed by the auctioneer ex-ante).

The second category of complex conditions are conditions on the auction allocation and/or transfers excluding bidder i, other than on the set of items sold and/or bought.

An example of the second complex category would be as follows. In an auction for dissimilar goods, bidder i may bid $5 for good A, conditional on good B not being won by a specific other bidder j. This bid satisfies a) and b): if bidder i did not happen to bid on, and win good B along with good A, then for him, verifying whether bidder j won good B is not possible knowing only what item he won himself (the information in Xᵢ), but would be possible using the information in the allocation except himself, X-Xᵢ (which will specify who, other than bidder i himself, won good B). Notice that the terms "always" and "at least sometimes" are included in the conditions a) and b), because in the case in which bidder i have happened to also bid on, and win good B, he would indeed know that bidder j could not have won good B, and thus be able to verify his condition on good A (in this case, verify that the condition is met), based only on the knowledge of what he won, Xᵢ, and without knowledge of what other bidders won, X-Xᵢ, causing conditions a) and b) not to be met.

The third category of complex conditions are conditions on statistics derived from information contained in the bid information excluding bidder i, (potentially using both winning and losing bids), where the statistics can be formed only knowing at least some information contained in the set of bids submitted.

An example of a bid in the third category would be that of bidder i bidding on good A and including a condition stating that there must have been at least 3 bidders that submitted bids above $4 for good A. This bid cannot be verified knowing only (Xᵢ, Tᵢ), and can be verified using a simple statistic formed with information in the bid information excluding bidder i.

The fourth category of complex conditions are conditions on variables that may only be calculated using at least some of the Information in the bid information excluding bidder i (where the calculation may require, for example, solving other hypothetical auctions using as the set of both winning or losing bids in the current auction, excluding some or all of bidder i's bids, as the set of bids for the hypothetical auction).

An example of a bid of the fourth category would be as follows. Bidder j above, participating in a uniform price auction for a stock, may state that he would be willing to buy up to 1,000 shares at a price of up to $7, conditional on the price impact of the shares won being at most, say, 0.0001$ per share on average (alternatively, he may put the limit of 0.0001$ on each individual share bought). Here, the variable bidder j conditions his bid on the price impact of his bid (which is related to the liquidity or depth of the auction). The in operation section of this document illustrates how price impact can be calculated, and how different versions of constraints capturing price impact may look like. The basic idea behind these kinds of constraints, though, is to capture how much bidder i winning the shares moves the price at which the auction clears, compared to if he had not participated. The bid falls in the third category above, because calculating this price impact, requires to use bids in the set of auction bids excluding bidder i (both bids that ended up being winning bids, and bids that were losing bids in the auction) and using these bids to solve other, hypothetical auctions (in which bidder i does not participate).

Other than price impact, bidder may condition on variables such as, but not limited to, auction depth, market depth, supply-demand imbalance (whether there are much more buyers than sellers, for example), oversubscription, competition, liquidity, dispersion of the auction allocation (that is, whether in a multi-unit auction, a few bidders win a large fraction of the total of goods, or whether there are many "small" winners), or equity (capturing whether, for example, one specific group of bidders wins many items, the difference to dispersion being that the identity of the winners matters). The specific definition of these variables, and the choice as which, if any, conditions on these variables bidders are allowed to submit is left to the auction (or mechanism) designer.

Also consistent with the invention are complex bids of a fifth category. These bids are item-less complex bids: they may include conditions of categories one through four, but differ from any of these categories, because the bidder bids a transfer (or amount) based on the conditions holding, without bidding on any auction items. For example, bidder k in the first example above may bid to pay $1 if item C is not won by a specific bidder h (which would be similar to a complex bid of category two, but is still different because the condition is not attached to a bid for, say, item A). Complex bids of the fifth category may be especially useful in auction-like settings, where the present invention is used to coordinate decisions.

In some embodiments of auctions of the present invention, bidders may submit bids that include more than one complex condition. In particular, bidders can combine conditions that are of the same category described above, and/or of different categories. Thus, a bidder in a securities auction may say that he would like to buy up to 1,000 shares of a stock for a per share price of up to $70, but only if the price impact per share was at most $0.0001, and the total quantity issued was above a certain amount. A bidder's bids, complex or not, may also include a condition that is standard in auctions, such as a minimum execution size. That is, bidder j in the previous example, may add the condition that he would like to buy at least 600 shares in the auction. In some embodiments, complex bids may also be combined with other contingent bids in the prior art. For example, bidder i may include conditions on the set Xᵢ that he wins, stating that he would like to buy A and B only as a bundle, and only if a specific other bidder does not win good C.

A bidder in some embodiments of the present invention may submit multiple complex bids (which may each have multiple complex conditions). Also note again, that a complex bid will refer to a bid that includes at least one complex condition (but may include more than one complex condition as well as any number of conditions that exist in the prior art).

In some embodiments of the present technology, the complex bids described can be submitted as bids that are valid for a given round in any dynamic auction in the prior art. Such dynamic auctions include, but are not limited to, auctions in which in at least one round, bids for the current and/or future rounds can be manually and/or automatically adjusted or entered. The present auctions could, for example, be run in one or more of the rounds, and the results (or information derived from the result) may be communicated to the bidders in that round, without having the allocation be implemented (in that goods are bought or sold) until the final round of the superseding dynamic auction.

In some embodiments, the set of admissible bids may consist of complex bids and other bids common in the prior art may be allowed, these other bids having no conditions and/or one or more non-complex condition.

### Bids/Orders in a Richer Setting

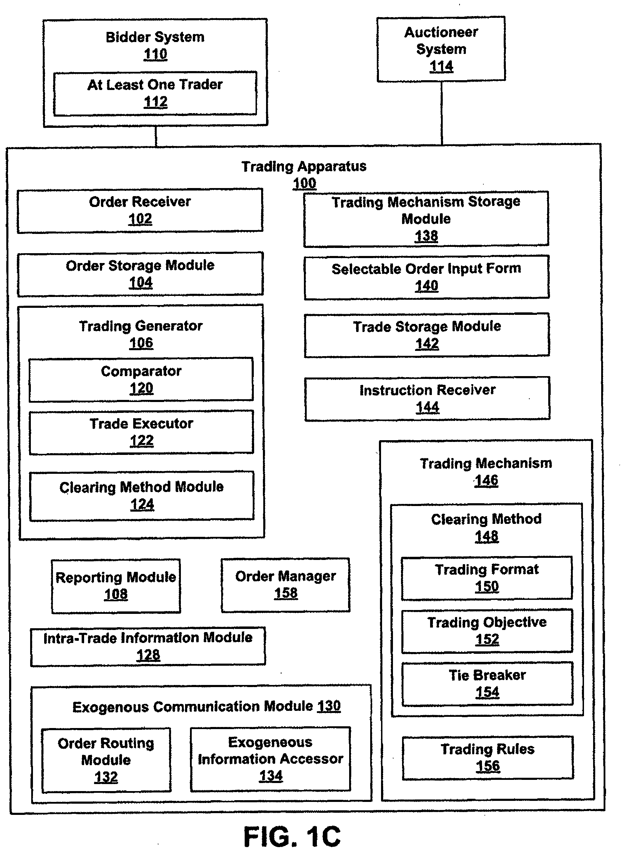

Figure 1C is a block diagram of an example trading apparatus as it would be used in the richer setting described below, in accordance with an embodiment of the present technology.

In one embodiment, the trading apparatus 100 includes an exogenous communication module 130. The exogenous communication module 130 communicates with an exogenous trading venue and/or a data feed. The exogenous trading venue is a trading venue other than the trading venue including the trading apparatus 100.

In one embodiment, the exogenous communication module 130 includes an order routing module 132 and/or an exogenous information accessor 134. The order routing module 132 sends a portion of the orders to the exogenous trading venue. It should be understood that a portion may refer to a part less than a whole of the orders, or the entirety of the orders. The exogenous information accessor 134 accesses information from the exogenous trading venue and/or a data feed.

Embodiments of the invention in the richer setting may allow bidders to submit a number of additional bid types, compared to the simple setting. These bid types include pegged, routed, and trading-inspired bids, which are described next, followed by a detailed description of how the complex bids from the simple setting carry over to, and are augmented, in the richer setting.

First, it is useful to introduce a concept from trading, namely that of pegging orders. Pegging of orders offers advantages in continuous markets that move fast (for example in the US equities market, where subsecond execution speed and high frequency trading strategies are common). Specifically, a trader may submit an order that is pegged to a variable such the best bid for a stock (or the ask, or the midpoint), by stating that he wishes to buy a specific quantity of the stock for a price that is equal to the current midpoint minus a number of cents (or ticksizes). The price of a pegged order would thus continuously adjust to the variable that the order is pegged to, without requiring continuous monitoring from a trader (who may otherwise have to submit and cancel orders continuously to replicate the pegged order, and would likely miss out if markets were to move quickly). A more general version of pegging is introduced next, as a feature of the present invention.

In some embodiments of the present invention, bidders may submit pegged bids, which include conditions (much like complex bids do), and for which it is useful to distinguish categories, which vary by the conditions that the pegged bids include.

The first category of pegged bids include conditions on the time at which the auction clears. For example, if an auction of the present invention was run for a specific NYSE listed stock, a bidder may condition a bid of $30 for 10,000 shares on the time at which the auction clears, specifying that he would like to buy only as long as the auction clears within the next five minutes, or by 3pm. Or, the bidder may specify that a bid for a given price and quantity be cancelled after 4pm.

A second category of pegged bids include a condition on at least one exogenous variable, by conditioning on said variable's realization at the moment that the auction clears. The bidder in the previous example may condition his bid on the current midpoint of the NBBO for the stock at the time of clearing, or on said midpoint being in a specific interval, or on the realized volatility of the stock over the last 3 min up until the moment of clearing, or on statistics formed with any other exogenous variable, such as the price of a specific call option, or the volume of outstanding best bids for that call option at the time of clearing.

An example of a bid with conditions from category one and two above would be that of a bidder specifying a to buy a good as long as the midpoint of a specific stock (or some other exogenous variable) has not moved outside of a given interval before 3pm.

The third category of pegged bids include conditions on the intra-auction information sent out by the auctioneer. For example, if the intra-auction messages sent out by the auctioneer includes a likely price range applicable to an order of a fixed size, the bidder may submit a bid to buy a specific quantity of the stock conditional on said price range being within an interval that he specifies. Or, if the intra-auction information includes information about the number of bids, or the total volume of bids submitted in the last 3min, a bidder may include a condition about said number or volume being above a threshold.

In some embodiments of the present invention, bidders may include in their bids combinations of conditions on exogenous variables and/or combinations of these and other conditions as described in the complex bids so far. In one embodiment, these combinations of conditions on the exogenous variables and the combination of these other conditions include at least one complex condition.

In embodiments of the present technology, bidders are allowed to submit routed bids, that is, bids for which at least a part of the bid may be, or has to be, routed out to other (exogenous) trading venues for execution. For example, a bidder in the auction may submit a bid for 100,000 shares of a stock for up to 5$, as long as the price impact of the bid is at most a certain amount, and with a routed part of the bid specifying that he wishes to send a limit order (or market order) to a specific exchange or collection of trading venues (likely through the use of an order routing system), to buy some number of shares of another stock for every share of the stock he wins in the auction.

Also consistent with the present auction formats are trading-inspired bids, namely bids that are the a) natural analogue to order types that exist in the prior art for trading mechanisms (in that they are submitted to exchanges or other trading venues) and that b) do not simply consist of a price and quantity (but instead, include some other specification). What is meant by natural analogue is that the defining feature of the order translates to the bid. For example, an immediate-or-cancel order is sent to venues, and is immediately cancelled if no execution occurs. The bid analogue would be a bid that is immediately cancelled if it does not immediately enter and subsequently win in the clearing of the auction. In some embodiments of the present invention, bidders may thus submit bids that are analogues to good-till-cancel/crossing orders, stop orders, and other standard orders that satisfy a) and b) above. The bidders may specify that their bid expires depending on other variables (for example depending of the value of the NBBO midpoint for some stock), and the bidders may specify a visible and a hidden part (much like is the case for reserve orders), and include complex conditions to the hidden part of the bid.

In the richer setting of this chapter, complex bids can be augmented compared to their definition in the simple setting. In particular, consider a bid submitted at time t' by bidder i bidding in an auction, said bid with a condition to be satisfied if and when it clears in an auction whose clearing process starts at time t (and is thus based on the valid, outstanding bids at time t) and generates an auction allocation and transfers (X, T) (where (Xᵢ, Tᵢ) refer to the allocation and transfers of bidder i). A condition included in said bid is to be called complex, if it has two of the following characteristics: verifying the condition (a) is not always possible knowing only: 1. bidder i's allocation and transfers (Xᵢ, Tᵢ); 2. bidder i's own bid history; 3. the time t of the start of the clearing process; 4. the history of exogenous variables until time t; 5. the history of trades up until t, minus the information about (X.T) (that is, the history of trades up until t , meaning until just before time t); and 6. the history of intra-auction information until time t, minus the information about the allocation and transfers (X,T) (where "not always" means that there exists constellations of bidders and bids submitted, for which verifying the condition is not possible knowing only said information in a)), and (b) requires at least sometimes using at least some of the information contained in the auction allocation and transfers excluding bidder i (X-Xᵢ, T-Tᵢ) for said auction, and/or some information that is contained in or derived from the entirety of auction information up until time t, or parts thereof (where "at least sometimes" means that there exist constellations of bidders and bids submitted for which verifying the condition requires using at least some of said information in b)).

The conditions (a) and (b) mimic the analogous conditions in the simple case, but differ slightly. In simple words, complex bids allow bidder i to condition his bid on something that he would not be able to find out based solely on the information available to him. Above, 1. and 2. are almost exactly as in the simple setting, except bidder i now has an entire history of bids that he submitted, as opposed to one valid outstanding bid.

The information about the clearing time t, 3, and the exogenous variable, 4, are included in (a) because otherwise, bids pegged on the clearing time or the time t value or time t history of the exogenous variable would be considered complex, which is not intended. Similarly, the history of trades up until time t is included, because otherwise, algorithmic trading strategies, were bidders submit bids depending on histories of trades, would be considered complex bids, which is also not intended. Note that these bids would not be pegged bids, because the trade at time t is explicitly excluded. The reason for excluding the trade information at time t is that It includes the entire allocation and transfers (X,T), and thus in particular includes (X-Xᵢ, T-Tᵢ). Finally, the intra-auction information is included in 5, because otherwise, orders pegged to the auction information or algorithmic orders as above based on the intra-auction information would be complex, which is not intended. Moreover, it is necessary to subtract the information about the allocation and transfers at time t, (X,T), since the general setup for the mechanism does not prevent the intra-auction information sent at time t from being included in the intra-auction mechanism (and it would be possible for (X,T) to be included in practice, if the clearing process was virtually instant, for the purpose of the application).

The first general comment about the definition of complex bids is that whether a bid is complex depends on the specific mechanism chosen, and, more precisely, on the history of intra-auction information available to bidder i at time t. Consider the case in which bidder i bids $5 per share for a lot of 10,000 shares, but only as long as there are at least 3 other bids for a lot of 10,000 priced above $4.5. If only sealed bids were admissible in the auction, the bid would be complex. If all submitted bids were immediately published, then the bid would not be complex, because the history of intra-auction messages up until time t available to bidder i would include information about all submitted bids, allowing to verify bidder i's condition. Note that if bidders had the choice between publishing and not publishing their bids, then the above bid would also be complex, because constellations of bidders and bids would exist, for which a) would hold (namely whenever at most 2 bidders bidding on a 10,000 lot at a price of above $4.5 chose to publish their bids).

The complex bid categories from the simple setting carry over. This is obvious for the first and second category (which are defined by conditions on the items sold or bought, and the allocation and transfers, respectively).

The third category of complex bids (conditioning on information contained in bids other than bidder i's bid), would now allow bidders to, for example, submit a bid stating that they would like to bid $50 for a stock, if there was at least some volume of bids submitted at a price of 49$ in the last 3 minutes. Notice that this example takes into account the bidding history of other bidders, as opposed to just the number of outstanding bids (as in the example given for the simple case, were a $5 bid on good A is conditioned on there being at least three bids above $4.5 for good A).

The fourth category of complex bids would also allow for more freedom in the richer setting, compared to the simple setting. A bidder could, for example, submit a bid for some number of shares conditional not just on the price impact that this bid would have, but conditional on what the change in the price impact is, compared to what the bid's price impact would have been, say, at its maximum or minimum in the last 5 minutes. Again, this example takes into account histories.

The fifth category, which is a bid with a condition as in any of the categories one through four, but without bidding on an item directly (as described in the simple setting), naturally carries over, given that bids of each of the four categories carry over.

In the richer setting, it is useful to describe two more categories of complex bids. Notice though, that with or without these additional categories, the collection of categories described is neither exclusive, nor exhaustive (much like is the case in the simple setting). Also note that in the richer setting, bidders may condition on all the variables already described in the simple setting, and have more flexibility in doing that due to the added time component. The added time component also allows bidders to condition on variables such as stability and momentum. Stability here refers to the likelihood of large price changes: for example, a bidder could condition his bid on there being many bids submitted for lower prices, conditional on lower quantities. (If the number of said bids was high, a price drop or drop in liquidity would be more likely). Momentum could be captured with bids that condition on the number of bids submitted in the last 3 minutes (which have not yet executed) with prices higher or lower than the current price.

In some embodiments of the present technology, bidders may submit complex bids of a sixth category, which include a condition on information about those bids that the bidder is matched with in the clearing process. For example, a bidder in a double-auction may specify that he would like to buy a certain good at a specific price only if the bid of the bidder that he buys from was submitted within a specific time interval (for example, at least 5 seconds before the auction cleared). Or, a bidder may include a condition on his place in the queue: specifying, for example, that he would like to buy a number of units at a given price only if he is not the last bidder who buys units at that price (where bids with the same price are organized by time priority, which means that older bids have priority over bids at the same price that were submitted at a later time). Alternatively, a bidder may condition his bid on the identity of the other buyers that win the good, or on the length of time since when the other winning bids to buy the item have been submitted.

In some embodiments of the present technology, bidders may submit complex bids of a seventh category, which includes a condition on the bid's effect on a variable in the intra-auction message if the bid was included in the set of valid outstanding bids, and said variable was updated accordingly. Note that whether this bid is complex depends, of course, on the intra-auction information available to the bidder. Also, this kind of bid has features of pegging. Finally, the bid condition may be met long before the bid executes at the clearing of the auction. In practice, it will likely be best not to let the bidder know when the condition has been met, as to avoid gaming by bidders. Another way to restrict abuse of such a bid may be to specify that this category of bids may not be canceled for at least some amount of time (for example, 3 seconds) after submission.

An example for bids in the seventh category would be as follows. If the intra-auction message consist of the likely range of prices applicable to a fixed-size order, a bidder may include the condition that the effect his bid would have on that price range may not exceed some amount per share (or some amount for the entirety of the order). Note that this example is intuitively similar to a bidder conditioning on the price impact of his order. The bid is complex, because at the time the bid clears (which may be long after the condition became true), the bidder cannot verify the condition knowing only his allocation and transfers, the time and the other information available to him in a), but can verify the condition knowing the entirety of auction information.

Complex bids of the seventh category may allow to run auctions that are less computationally intensive, since these kinds of conditions may be easier to calculate, compared to the calculations involved with complex bids of the fourth category that have a price impact condition.

Finally, note again, that all aspects of the invention described in the simple setting are included in the richer setting. Moreover, any of the auction mechanism features and bid features can be combined. Thus, in particular, bidders may submit multiple complex bids (which may each have multiple complex conditions), and where a complex bid will refer to a bid that includes at least one complex condition but may include more than one complex condition, as well as any number of conditions that exist in the prior art. Bidders may also submit bids that include any subset of non-complex conditions described in this chapter (meaning that a bidder may have a pegged bid that is routed and/or has other trading-inspired conditions). A single auction in the present invention may be run as, or in, at least one individual round of a dynamic auction (as mentioned in the context of the simple setting).

On note, the choice as to which kind of the complex bids described in present application may be submitted, and the way in which the complex bids, that is, the complex conditions are formulated is decided by the auction designer. Formulations may include, but are not limited to: selecting among a finite set of options, specifying sentences, specifying mathematical conditions, functions, or ranges.

Further, for illustrative purposes, the following is a non-exhaustive list of goods the present invention may be applied to: public and private sector bonds, bills, notes, stocks (including baskets, like ETF), derivatives (including options, CDS, variance swaps); commodities (including power); oil drilling rights; emission allowances or credits; real estate; online advertising; spectrum licenses; airport landing spots; data capacity; and other goods, tangible and intangible.

Operation
Trading Rules (Other than Clearing)
Rules Around Clearing
The Clearing Process; Ingredients
Clearing Method: Theory and Advantages
Operation
Simple Setting

The basic timeline of the auction process for auctions in the present technology is also standard in the sense that the auction has to be initiated, bids have to be collected, the auction has to be cleared and the relevant results have to be communicated back to the bidders. Embodiments of the present technology providing auctioneer system (10), the auctioneer sends out intra-auction messages to all participating bidders over the communication network (30) (101). These messages may include information about the auction mechanism, specifically, trading rules (and include the candidate set of items that may be auctioned off, or the time period during which bids may be submitted, the kind of admissible bids, bidding deposits) and/or the clearing method used to solve the auction, as well as any other relevant information.

Bidders enter the bids into the bidder systems (20i), which are send through the network (30) and received and stored by the auction database (30) (102). Bidder's may receive a message from the auction computer confirming that their bids were received. The bidder's may also have the option to revise or cancel their bids before the clearing of the auction starts. The bids are stored in the auction database (45) and accessed by the auction program (46) which checks the bids' validity, cancels any invalid bids and generates the set of valid, outstanding bids for the auction (103).

The auction database receives the bidders' bids and proceeds to calculate and update the set of valid outstanding bids. In particular, the way in which this set is determined is up to the auction designer. Some design choices in this context are simple, like cancelling bids that are invalid in isolation (such as a bid to buy a good up until a time that has already passed), some choices are more involved (a designer may chose to throw out the last submitted bid if it is invalid in combination with the previously submitted bids, or chose to throw out the oldest bid that leads to a conflict in conjunction with the set of outstanding bids).

The auction program (46) clears the auction at the predetermined time of clearing, using the set of valid outstanding bids and the clearing method, stores the results (that is, allocation and transfers (45-5)), and may also derive additional information (45-6) from the auction results and/or bids, some or all of both of which may then be stored in the auction database (45) (104).

The process of clearing the auction is described in more detail at the end of the chapter, after the set of admissible bids (which are part of the inventive auction system) has been described. This is done, because the characteristics of the admissible bids directly affects the elements of the clearing mechanism that need to be specified by the auctioneer in order to clear the auction, as well as the process of executing the clearing based on the specified clearing mechanism.

And example of information derived from the auction results (45-6) in step (104) could be the average winning bid in a multiunit auction, or the average size of the winning bid. Information derived from the bids may include statistics formed with bids (such as for example, a statistic capturing the level of oversubscription in the auction, formed by counting the volume of losing bids above some reserve price), or derived information that involves more sophisticated calculations based on the bids (such as for example a variable capturing the price impact of the three largest winning orders in a multi-unit auction, which would require solving a number of hypothetical auctions based on both winning and losing bids of the current auction; note that this example is described in more detail in the examples section of the document).

The auction computer (40) sends back the pertinent information to the auctioneer and the bidders, which may be different for all or some of the users, and include any subset of the information in (45-5) and (45-6) (105). Note that since said information may vary by bidder, the auctioneer may for example decide to communicate to bidder i only his allocation and transfers (Xi,Ti), and the average winning bid in a multi-unit auction.

Note that the auctioneer may have a number of choices as to the monetization of the auction, that is, as to specifying monetary transfers to and from the bidders, to be associated with the execution of trades. For ease of exposition, these options are described in the context of the richer setting, because embodiments of the invention in the richer setting may be used to run a trading platforms, and transaction fees and rebates (that is, monetary transfers) are common in practice for trading platforms (where as one-time auctions may charge only participation fees).

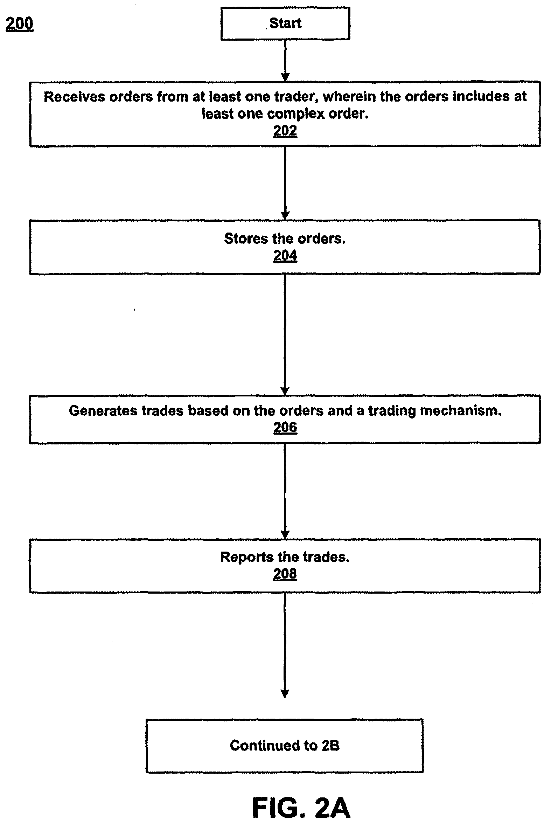

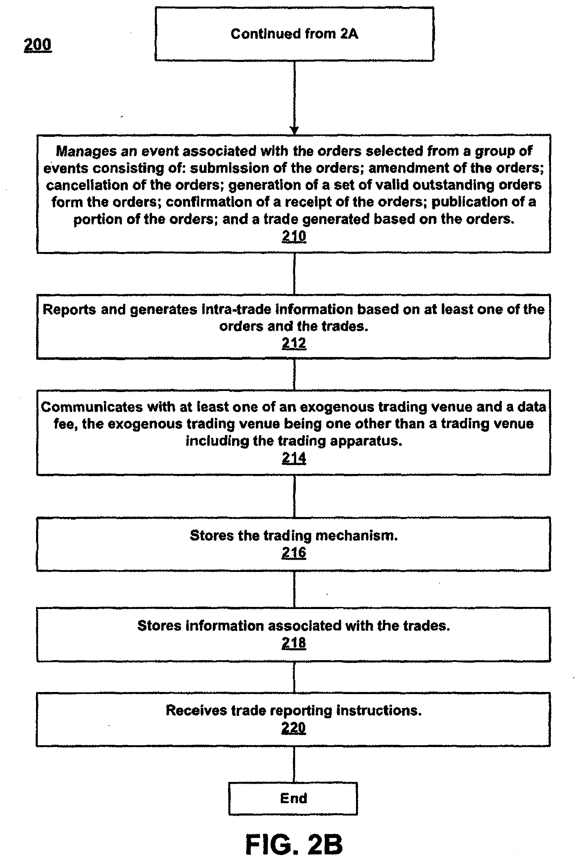

Figures 2A and 2B show a flow chart of an example trading method, in accordance with embodiments of the present technology. Of note, it should be appreciated that the steps shown therein may be performed concurrently or sequentially.

Referring now to Figures 1A-1C, 2A and 2B, at 202, in one embodiment, orders are received from at least one trader 112. The orders include at least one complex order, as is described herein.

At 204 and as is described herein, in one embodiment, the orders are stored. In one embodiment, the orders are stored internal to the trading apparatus 100. However, in another embodiment, the orders are stored external to the trading apparatus on a storage medium coupled with the trading apparatus, via wire and/or wirelessly.

At 206, in one embodiment, trades are generated based on the orders and a trading mechanism 146. In one embodiment, the orders that are stored at 204, are compared with the trading mechanism 146. Based on this comparing, the trades are executed. In one embodiment, trades are generated via the execution of a clearing method 148.

At 208, in one embodiment, trades are reported. In one embodiment, the trades are reported to at least one trader 112.

At 210 and as described herein, one embodiment manages an event associated with the orders selected from a group of events consisting of: submission of the orders; amendments of the orders; cancellation of the orders; generation of a set of valid outstanding orders; confirmation of a receipt of the orders; publication of a portion of the orders; and a trade generated based on the orders. It should be understood that the foregoing list of events is non-exhaustive. At 212, in yet another embodiment, intra-trade information based on orders and/or trades is reported and generated.

At 216, in one embodiment and as described herein, the trading mechanism is stored. At 218, in one embodiment and as described herein, a selection of a selectable order input is received from at least one trader 112. In embodiments, the selection of a selectable order input is received by the trading apparatus 100 by any number of input forms, such as but not limited to: voice commands, touch screen, keyboard entry, icon selection via an input control, etc.

At 220, in one embodiment, information associated with the trades is stored. At 222, in one embodiment, trade reporting instructions are received. Of note, in one embodiment, the trade reporting instructions instruct the reporting module on where and what to report. In one embodiment, these reporting instructions may be input via an input device coupled with the trading apparatus 100. In one embodiment, the instructions may be received from the auctioneer system 114. In another embodiment, the instructions may be received from an entity other than the auctioneer system 114.

In one embodiment and as described herein, the trading method 200 operates in at least one round of a dynamic auction.

### Richer Setting

In one embodiment, the auction database receives the bidders' bids and proceeds to calculate and update the set of valid outstanding bids.

Referring still to Figures 2A and 2B, at 214, one embodiment communicates with an exogenous trading venue and/or a data feed. The exogenous trading venue is different than the trading venue comprising a trading apparatus, such as, but not limited to, the trading apparatus 100, from which an order is received from at least one trader 112. In one embodiment, the communicating of 214 includes sending a portion of the orders to the exogenous trading venue and accessing information from the exogenous trading venue and/or the data feed.

### Trading Rules (Other than Clearing)

The following rules, and any combination of these rules, are consistent with the present invention and to the be defined by the auction designer.

Bidders may cancel bids at any time, only after a specific delay time or a random delay time, and these rules may apply to all or some bids, may vary over time, and may depend on the individual bid or the combination of bids submitted so far, or both.

Bidders may amend bids and, in some or all cases, keep the bid's time priority, or delay the time priority by a specific or random time, or other rule. There may be rules regarding the bids submitted so far by a bidder up until a given time, such as, but not restricted to, a maximum on the number of outstanding bids, and rules that apply to any given time interval, such as a maximum on the number of bids that the bidder may amend or submit within a given time interval. Moreover, these rules may be different for different bid types.

As for transparency requirements, note that auctions in the present invention leave some degree of freedom to the auction designer choosing the specific embodiment. For example, the designer may specify that the auctioneer or the bidders may choose to make public part, or all, of the bid on a bid-by-bid basis, or on all the bids, for part or all of the time through intra-auction information or after the auction is concluded. Bidders may choose to publish information or send messages to all participating bidders.

The intra-auction information the auctioneer decides to disclose may include information about the current bids, or information derived from the current bids, or information about the history of auction results, or any other information. For example the auctioneer may disclose information about realized volatility over the auctions that concluded in the last 3 minutes, or information stating that there is interest in a stock (without disclosing whether there is interest to buy or sell), or information about the likely range of prices that a bid of a given fixed size may execute at (that is, what the likely winning price, if any, of the bid would be in a double-auction). Moreover, at one, some, or all points in time, the auctioneer may decide which set of bidders are to receive which intra-auction message (meaning that not all bidders will receive have the same infra-auction information at all times).

In auctions of the present invention, the auctioneer may exercise choice over the set of auction items sold or bought, and may only announce a candidate set of items to be bought or sold ex-ante (for example, by including that information an initial intra-auction message).

Regarding monetization of the auction, the auctioneer may decide to charge participation fees, or charge or pay bidders for goods that they buy or sell, much like exchanges charge transaction fees and/or pay rebates for orders that they execute. It is useful to distinguish three categories of charges and rebates. The first category of charges and rebates are the standard charges/rebates existent in the prior art for trading mechanisms and/or auctions: per unit rebates/charges, which may differ depending on whether, for example, the order was resting in an order book (and may be paid a rebate upon execution, since it was providing liquidity) as opposed to being a market order send to execute against orders in the book (which may be charged a fee for taking liquidity). In some embodiments of the present invention, a second category, namely that of differential charges/rebates may exist: The auctioneer may decide to charge bidders depending on features of the bid. For example, a bidder who won shares in an auction may pay more per share if the bid he submitted included a constraint, such as a minimum execution size, or a condition on the price impact of the order. Or, the bidder may pay more if he engaged in what would be called "order splitting" in a trading context: for example, if the bidder wins a certain quantity in total but the winning quantity was made up from a large number of small bids.

In some embodiments, the auctioneer may also choose to pay rebates or charge fees of a third category, which depend on the clearing conditions at the time the bid is executed. Charges and/or rebates, that is, payments, may vary with the length of time that the bid had been in the set of valid outstanding bids until the auction cleared (this is something a bidder may be able to estimate at any time, knowing when he submitted the bid). Other criteria for determining payments include, but are not restricted to, what the bid's place in the queue of winning bids was (which depends on the auction allocation in a way that is hard or impossible for the bidders to estimate), or how much liquidity the bid or bidder provided (measured by how much the bidder's bid affected the allocation by increasing, for example, the total volume traded, compared to how much would have been traded without the bidder). In turn, in some embodiments of the invention, bidders may have the option to specify the maximum amount of fees that they would be willing to pay once the bid executes, for example, on a per share basis.

In some embodiments of the invention, the sum of the rebates paid to the bidders and the fees received from the bidders while implementing allocations may always be positive, but that does not always have to be the case. The auctioneer could charge fees and pay rebates in fourth way, namely one that requires the ability to exercise discretion over the budget, and choose to only balance his budget (so that rebates and fees cancel each other) on some allocations, or even pay at the clearing (if the rebates exceed the fees collected) on others. This flexibility may allow the auctioneer running a sequence of auctions to have better control over trading volume, or price stability, for example.

The auction designer may choose to include any combination of the four categories of charges and/or rebates described above.

### Rules Around the Clearing

In some embodiments of the invention, the clearing step of the auction would involve sending orders to other exchanges and/or other trading venues (such as Alternative Trading Systems in equities). In particular, this would be necessary if routed bids (defined further below) are allowed. The clearing program of the auction may thus, for example, have to be able to access and retrieve information about the outstanding volume at the NBBO in order to include said volume in the database of valid, outstanding bids for the auction. In particular, this may be necessary in applications were regulatory requirements such as trade-through rules require a trading venue that clears at a price outside of the best bid and offer to sweep up any available volume (outside the venue) up to that price. In such a case, the auction program would have to send orders to buy from or sell to the respective offers and bids on the venues currently offering those best prices. Note that from the auction perspective, this introduces a risk of non-execution, if the orders sent out by the auction are not filled or filled only partially, or not at the expected price. The auctioneer may thus choose to give traders the option to specify how much execution risk they are willing to take (for example, they may accept up to 10% deviation on the volume bought or sold), and/ or choose to cover part of or all of the variations due to partial fills (for example, by covering any price differences that arise when trying to fill the targeted volumes as specified at the clearing of the auction.

As to when to clear the auction, the auctioneer in the richer environment has a number of options. He may choose to clear the auction at a specified time (for example hourly, from 9am to 5pm), or clear depending on some condition that can be verified with information derived from the valid bids in the database and/or information exogenous to the auction. For example, the auctioneer may continuously monitor the set of valid and outstanding bids, calculate the resulting allocation and actually clear (and implement) the allocation only if the resulting trade has at least a specific volume, and/or not unless the volatility of some exogenous variable was at most a certain amount. Or, he may clear an auction for a stock only if at least a minimum trading volume is achieved and the difference between the auction's clearing price and the clearing price of the previous auction is at most a specific amount. Alternatively, an auctioneer may also be able to exercise discretion about whether a trade should occur, conditional on a condition being met, for example, if the auctioneer would like to manually instate a trading halt if the drop in prices from one auction to the next was large.

The auctioneer's choices over when to clear an auction, implies that in some embodiments, bidders will know exactly when a trade may happen, or may not know when the trade may happen or could happen at all.

Note that the process of calculating the resulting allocation based on a current set of valid outstanding bids takes time. If a clearing process is started based on the valid, outstanding bids at time t, then the process may not end until time t+D. Thus, it is necessary to specify how to handle bids that are submitted in the time interval [t,t+D], as well as how to handle the cancellation that occur in the time interval (and this affect the valid, outstanding bids currently used in the clearing process). The auctioneer may specify that new arriving bids are collected in the database and then merged with the remaining valid bids from the cleared auction. The auctioneer may allow bidders to cancel bids at any time, but delay the cancellation of bids that are used in a clearing process until after said process has been completed. Note that the auctioneer also has to make design choices about what to do with bids that were not, or only partially, filled in the clearing process. On possible choice may be to include any unfilled portion of these bids in the set of valid outstanding bids after the clearing.

The following describes the transition from one auction to the next, when a sequence of auctions is run. First, information about exogenous variables and intra-auction messages may be sent at all times. Now, consider an auction that started at time t'. Say that at time t>t', the clearing process of this auction starts, and is concluded at time t+D (when trades are also executed). The database of valid, outstanding bids would then be updated (for example, by merging any of the partially filled bids from the clearing that are still valid with the set of valid bids submitted between time t and t+D), and serve as the starting set of valid, outstanding bids for the next auction. Said next auction would be designed to start at t+D. Trade information for the auction that started at t' may also be published at t+D, and added to the history of trades available for said next auction. In general, at its start, the next auction would have access to all histories up to time t+D (this includes histories of intra-auction information, exogenous variable information, the set of submitted bids and the set of valid, outstanding bids).

### The Clearing Method

The clearing mechanism for a complex auction mechanism may be that associated with any of the standard auction formats in the prior art, including first or second price auctions for individual goods, and discriminatory price, or uniform price auctions for multi-unit auctions, combinatorial version of those formats listed so far, other combinatorial auctions, and a general complex trading format to be defined later. Consistent with the present invention is also the inclusion of other standard features such as reserve prices on part or all of the candidate auction items.
Note that the auctioneer may also need to specify tie-breaking rules, for example, by specifying that price-setting bids in a uniform price auction may be pro-rated. (A much less common alternative may be to allow for time priority among bids of the same price, such that earlier submitted bids would be filled first. Yet another alternative may be to give priority to bids that do not include a constraint, such as a minimum size, or specific complex constraints). In particular, the tie-braking rules are also meant to include rules as to how to choose among a set of clearing prices (for example, when more than one price is consistent with a given allocation in a double-auction that requires one auction price to be applied to all units bought or sold).

Moreover, the choice of the clearing method may include choosing an objective function. The role of the objective function is to choose the auction allocations and transfers to be executed, in case the clearing method and tie braking rules select more than one candidate allocation and transfers for the auction. Note that the term objective function does not necessarily mean that there exists a mathematical function allowing to automate the choice, but rather refers to criteria that the auctioneer would consider in choosing amongst said candidate allocation and transfers. Possible criteria may include, auctioneer revenues from the auction, auctioneer costs from the auction, gains from trade, trade volume, or other variables, such as equity or dispersion in an auction (which may be captured with statistic based on the auction result). An auctioneer may choose to maximize any one of these criteria, or any combination according to any value function of his choice. The value function may change over time, and/or the auctioneer may "manually" select amongst the candidate auction results. In practice, it will likely be advisable to announce ahead of the auction, exactly how the winners will be determined, which would include disclosing the auctioneer's objective function.

To illustrate the implications of the choice of objective function and admissible bids on the clearing process, consider the simple example of a bond issuer who decides to sell a total notional of either 1billion or 2 billion, and allows bidders to submit bids that include conditions on the total quantity issued. (Bidder j in the previous example would state that he would like to buy at least 600 shares and at most 1000, and would be willing to pay up to 7$ per share if the total issued was 1 billion, and up to 6.5$ if the total issued was 2 billion). If the bond issuer's objective is to maximize revenue, and he chooses a uniform price auction format, then the clearing process in this simple case essentially amounts to solving two Independent uniform price auctions, one for a 1billion notional issued, and one for a 2billion notional (while considering only those bids that are valid conditional on the respective issuance volume), and to choosing whichever of the two auctions had the higher revenue. Much ,ore detail on the clearing methods of complex auctions is provided further below.

in the richer setting, the auctioneer has more choice as to the clearing method chosen compared to an auctioneer running the auction in the simple setting of chapter 1. For example, the auctioneer may choose to maximize a combination of revenue and some metric for price stability, rather than, say, maximizing only revenue. For an auctioneer running double-auctions for a stock using a uniform price auction, a natural metric of price stability could be difference between the last auction price for the stock and the possible price in the current auction, or the realized volatility of the auction prices over a specific time interval leading up to the current auction, once the possible current auction price is included. Generally, in some embodiments of the present invention, an auctioneer may chose objective functions that include metrics formed with past auction results, and moreover, these objective functions may change over time (for example, an auctioneer may include price stability into the objective function only when volatility for the auction good, or for related assets is higher around the time of the auction).

In general, the clearing process of a trading mechanism (that is, a trading mechanism, which is not necessarily an auction mechanism), involves taking in a set of valid, outstanding orders and applying a clearing method to said set of orders. The clearing method can be any method specified by the mechanism designer (the designer has complete control and may for example, decide to disregard all orders submitted at uneven seconds, and start an auction with the remaining set of bid, even if that evidently would not be a wise trading format). If the trading format happens to be an auction format, then the trading mechanism belongs to subgroup of trading mechanisms that are also auction mechanisms.

At this point, it is useful to introduce a number of non-auction trading mechanisms that are used in practice, and also explain how complex orders would look like for these mechanisms.

First, consider the trading mechanism used by most exchanges, such as the NYSE. Using the terms introduced in the richer setting, this mechanism includes: a set of admissible bids/orders (including limit orders, market orders, and usually a myriad of other order types), rules for calculating the set of valid, outstanding orders (for example, a stop order to sell may become active, as soon as a stock price drops below a certain limit), rules regarding intra-trading information and trade information (orders in the book may be displayed in entirety, or partly hidden, such as with reserve orders; trades are reported, in accordance with SEC post-transparency requirements). Moreover, the mechanism includes rules as to how to cross orders (that is, how to generate trades based on a set of valid, outstanding orders), and these rules represent the trading format (including tie braking rules).

Embodiments of the present invention include augmenting trading mechanisms in the prior art, such as those used on exchanges and other Alternative Trading Systems in equities, and change/augment these mechanisms to become complex trading mechanism by introducing complex orders. As already mentioned, there are a myriad of possible complex orders, many of which could be used in a complex trading mechanism. Below is a very short list of examples of complex orders for three trading mechanisms. Also note again, that any of the monetization options (such as differential rebates and fees) discussed so far, also would apply in the context of trading.

In a trading mechanism as used by exchanges, traders may be allowed to submit the following complex order: an order that is hidden (not displayed in the book), specifies a price, quantity, and maybe a minimum size, and a complex condition which states that (if execution of the order happened within the NBBO), the order may be matched only with orders that have been submitted at least 3min before the execution of their order. Or, traders may include complex conditions stating that they would like to buy or sell a quantity only if the total quantity in the trade was above a specific amount, or above some multiple of the quantity that they end up buying. (For completeness, note that any order that is displayed in the book, or more precisely any quantity displayed, would likely not be allowed to have a complex condition attached to it.) Another kind of complex order could specify a price and quantity to be traded, conditional on there having been at least some volume of complex orders submitted in the last few seconds, which were not immediately canceled and had a price above a certain threshold.

As another example, consider a mechanism such as NYSE Matchpoint. In this case, orders submitted consist only of quantities that the traders wish to buy or sell. The orders are crossed/cleared a number of times during the day, at a price determined on another venue (for example, by choosing the average price over a randomly selected minute of trading on the NYSE in the hour preceding the cross). Since there is no way to balance demand and supply due to the fact that the price is determined elsewhere, orders need to be pro-rated at clearing: if there are more buy than sell orders, all sell orders get filled, while the buy orders are pro-rated; if there are more sell than buy orders, it is the reverse. In this case, traders may be worried that their order gets filled entirely exactly when they were on the wrong side of the trade (a buy order would get filled entirely precisely when there are more sellers, suggesting that prices may move down). This concern may be even more significant for someone submitting a large quantity. A complex bid in this context may include the condition that the ratio of supply and demand may not be more than some number, or at most equal to some number. Or, a complex bid to buy up to some quantity may include a condition that the total quantity traded be at least some multiple of the quantity that the trader ends up buying in the cross.

As yet another example, consider platforms such as pipeline trading, that may send out intra-trading information, which is partly based on the orders that are currently in the system. Pipeline trading, which is geared toward the execution of large orders, invented a proprietary block price range that specifies at what prices an order of 100,000 shares may execute. This range of prices takes into account information about the set of valid, outstanding orders in the system, as well as "fundamental" information about the stock, such as its volatility. A complex order of the seventh category as introduced before, may then include a condition on the effect that the order would have on said block price range. Note that the trader would not know whether his order has not yet executed because the condition is not met, or because there is simply not enough interest on the other side (no buy or sell order to match his order). In order to prevent gaming by traders, auctioneers may also always specify that complex orders of this kind (or complex orders in general) cannot be cancelled for at least some number of seconds.

In other embodiments, a bank may use an embodiment of the current invention by allowing their customers to submit complex orders, generate trade results and either a) execute the trades and then execute any unfilled customer orders somewhere else, or not execute the trades, but use the information derived from the trade result to execute all or part of the customer orders somewhere else.

Also note that if complex orders were allowed on an exchange or other trading platform, algorithmic trading strategies that send out orders to said venues could be amended to also send out complex orders, as well as to use the information gathered from the execution of those complex orders.

### Discussion of the Trading Mechanisms, Clearing Procedure

Before describing the clearing process, note that once the clearing method is chosen, and all bids are collected, the mathematical problem of clearing the auction is fully defined.

In short, solving any of the auctions (or trading mechanisms) that allow for complex bids (that is, both the auctions in the simple setting and the richer setting), and any of the more general trading mechanisms that allow for complex orders (which include auctions, but also other mechanisms), amounts to executing the two steps described below. Note that for ease of exposition, the following descriptions are worded in terms of auctions, but are identical for complex trading mechanisms (in fact, the complex trading mechanisms derived from trading mechanisms used in practice, such as on exchanges, may involve much less computational burden than typical auctions, at each of the two steps).

The process of solving a complex auction mechanism involves:
1. solving/clearing hypothetical auctions (using the auction format and the tie braking rules that are part of the chosen clearing method) for different possible states of the world, and
2. choosing a result of a hypothetical auction (using the objective function defined as part of the chosen clearing method), whose result is associated with an equilibrium in the corresponding state of the world.

In the following, each of the terms described above will be defined. The concept of states of the world comes from game theory. Someone who is looking into the future, may think that there are two possible states of the world tomorrow: that it rains, and that it does not rain. Alternatively, someone in a game show may wonder what is hidden behind a door right now, and think that there are three states of the world: one in which nothing is hidden, one in which $100 are hidden and one in which $10,000 are hidden. Moreover, the person may assign some probability to each of the states of the world. Similarly, in an auction, individual bidders may envision different states of the world for things that they does not know at the bidding stage: the bond auction may turn out to be oversubscribed or undersubscribed because other bidders are either very interested or not that interested, a specific bidder may end up winning or not winning a specific item, the auctioneer may decide to issue a larger or smaller quantity of bonds in within a range of possible issuing-quantities that he had announced.

In practice, bidders deciding on their optimal bidding strategy will make assumptions over the possible states of the world and the likelihood of these states of the world and then form bids. The difficulty the bidders face, though, is that a specific bid may turn out to have been unwise if a certain state of the world is realized. A bidder who bids in a multi-unit auction that happened to be highly oversubscribed may regret not having bid higher, but chose not to do so in the first place because he knows that his bid affects the price (both in a uniform and a discriminatory price auction), and he is moreover at risk of the winner's curse if the good auctioned of has common or interdependent values (that is, if each bidder's valuation for the good depends at least in part on other bidders' valuation for the good).

The complex bids of the present invention intuitively allow bidders to include conditions that express what they care about. If a bidder would like to buy a house in a real estate auction only if his friend wins the house next door, he could include that as a condition of category two. The associated relevant states of the worlds would then be: "my friend wins the house next door", and "my friend does not win the house next door".

A bidder in a bond auction may submit a complex bid with a condition on the number n of bids above a specific price p (which would be a complex bid of category three), and the associated relevant states of the world would be: "there are more than n bids above price p", and "there are n or less bids above price p".

Or, a bidder in a multi-unit auction may care about the total quantity traded, because he knows that a bid for a given quantity and price will likely have less price impact, the larger the total quantity traded turns out to be (so that he may want to bid more aggressively, conditional on a higher total trade quantity). Similarly, bidders in a bond auction may care about, and like to condition their bid on, the volume issued because said volume may affects the liquidity of the bond in the secondary market (with higher-volume issuances likely being more liquid). As a result, the auctioneer may allow bidders to distinguish three states of the world: one in which the total quantity traded is in [0,q1], one in which it is in (q1,q2], and one in which it higher than q2. Or, the auctioneer may state that the issuance volume will be either in (q1,q2] or in (q2,q3].

In the examples above, it seems as if the states of the world to be considered by the auctioneer are only two or three. For the examples involving total quantity, solving the auction may indeed involve solving only two or three hypothetical auctions in a way to be explained next. In auctions for dissimilar objects, though, or when the identity of the winning bidders matter, solving the auction involves refining the states of the world that have been "distinguished" implicitly by the conditions in the bidders' complex bids. Consider the example above, involving the house next door. There are potentially many allocations in which the friend wins the neighboring house, all of which would have to be considered. As a result, solving the auction may involve defining refined states of the world, each corresponding to one specific allocation in which the friend wins the house next door. Thus, an group of refined states would correspond to the "broader" state of the world described by the bidder as "my friend wins the house next door".

Refining the states of the world at the clearing state is especially important when bidders submit different complex conditions. For example, another bidder may include a condition on whether a specific other bidder Y wins a specific house H. In this case, the refined states of the world would be grouped in four different groups (one group, for example being the group of states of the world in which the fist bidder's friend wins the house next door, and in which Y does not win H). Similarly, if bidders in an auction for dissimilar goods were allowed to specify a condition stating "no bidder wins more than 5 items" and "at least one bidder wins five items or more", there would be two groups of refined states of the world that match the states of the world distinguished by the bidders.

The step of identifying the different relevant (groups of) states of the world can be very difficult computationally, so that choosing what complex conditions to allow bidders to express is an important part of the mechanism design. To reduce the computational difficulty, it may be advisable to allow bidders to submit only one complex bid, or to restrict the admissible conditions (such as in the example above, by allowing to condition only on the total quantity being in one of 3 pre-determined intervals). Fundamentally, this design choice involves trading off what bidders may want, with what is computationally doable and appropriate for the specific allocation, also taking into account any effects on incentives and strategic behavior of bidders (who may be specifying certain conditions also because they have more information about the items than other bidders). Notice that this design choice/problem is very similar to that arising in combinatorial auctions in the prior art, where all-or nothing bids increase the complexity for the auctioneer at the clearing stage (all-or-nothing bids are bids that allow a bidder to specify, for example, that he wishes to by goods A, B, and C, but only if he wins them all together).

After having identified the relevant states of the world, the auctioneer proceeds to solve hypothetical auctions in the refined states of the world. Computationally, in some auction designs it is enough to solve hypothetical auctions only for the groups of refined states of the world, which much reduces the computational problem (this point is explained in more detail below).

The step of solving the hypothetical auction involves first identifying, within the set of valid, outstanding auction bids, the set of bids that are valid conditional on the state of the world. For example, if a bidder in the auction above conditioned his bid on the total trade quantity being in [0,q1], then that bid would only be valid in the states of the world in which total quantity is in fact in [0,q1]. Moreover, any bids without complex conditions are valid bids for any state of the world. Thus, in the previous example, a simple bid containing a quantity and price would be valid no matter what total quantity traded.

Having identified the set of valid bids for the state of the world, the auctioneer proceeds to solve an auction based on said bids. The auction is referred to as hypothetical to underline the fact that it is only one of the potentially many auctions associated with the different states of the world.

How the hypothetical auction is run on the corresponding set of valid bids is defined by the specified auction format and tie-braking rules that are part of the clearing method. Note that while solving a hypothetical auction may be computationally hard, the methods employed to do so are standard in the prior art.

In the following, step, 1, and step, 2, is described for a very simple case, in which the auctioneer decides to sell some quantity of stock with a uniform price auction format, announces that his objective is to maximize auction revenue, and allows bidders to submit bids conditional on the quantity being between 1 and 2 million shares or between 2 and 3 million shares.

In step 1, it would be necessary to identify the set of valid bids for each of the states of the world. Next, for each of the two states of the world, the auctioneer would reconstruct the demand curve from the set of valid bids (by organizing the bids from highest to lowest price). For each possible total quantity q₁^{∗}sold in, say, the first interval of [1million, 2million], the auctioneer could then identify the last winning bid pᵢ* and calculate the associated revenue as q₁*, p₁* (formally, the auctioneer is thus solving a uniform price auction for every possible quantity in the interval, and calculating the associated auction revenue). For any quantity in said first interval, let Q₁*, P₁* be the one with the highest revenue (if there are ties, the auctioneer may choose to brake ties by choosing the quantity that is largest). Note, though, that Q₁* may not exist, namely if the total quantity demanded aggregating all bids conditional on the total quantity being in [1million, 2million] is below 1 million. If Q₁* exists, it would represent an equilibrium for the state of the world in which total quantity is in [1million, 2million] (and of course, in the state of the world in which the quantity issued is exactly Q₁*).

Next, the auctioneer would repeat the process for the second interval, with quantities in [2million. 3million], and may find another equilibrium in Q₂*, P₂* (which may intuitively mean that interest in the auction was relatively high). Note that for ease of exposition, the auctioneer is being defined as the one executing the steps here- in practice, this would be done by the algorithm implementing the clearing method.

In step 2, the auctioneer would use his objective function (which is to maximize revenue) to chose between any available equilibria. In this, case, if equilibria associated with Q₁* and Q₂* exist, he would pick the one with the highest revenue. Note that allowing bidders to condition bids on the total quantity in this example does not help the auctioneer if the auction is undersubscribed anyway (so that neither Q₁* and Q₂* exists, or only Q₁* exists), but may allow an auctioneer to take advantage of the level of oversubscription if the auction turned out to be in fact oversubscribed (that is, as opposed to choosing an fixed quantity to be sold ex-ante, of say, 1.5 or 2 million, he now can take advantage of oversubscription and end up issuing 2.3 million, for example).

Stepping back, clearing an auction with complex bids involves solving a number of hypothetical auctions for specific states of the world. The formats of each of these hypothetical auctions, though, will most often be a standard format existing in the prior art, and thus involve standard methods for solving these auctions.

The previous example is a very simple because the hypothetical auctions to be solved for each state of the world were standard uniform price auction, which are easy to solve. In many applications of auctions of the prior art in practice, though, solving said auction is difficult. For example, minimum execution size constraints on bids (which are common) in a standard uniform price auction, turn said auction into a combinatorial uniform price auction: bidders still have to pay the price of the lowest winning bid, but the winner determination problem is a set-packing problem and thus belongs to a class of problems shown to be NP hard. One way to reduce the complexity is to allow only for minimum execution sizes that are quoted in lots of, say, 1,000 shares. Similarly, determining winners in auctions for dissimilar goods, especially in the presence of all-or-nothing bids, involve solving very difficult combinatorial problems. For these combinatorial problems, it is for example necessary to include sophisticated tie-braking rules, which may depend on the specific application. In order to render these auctions tractable in practice, auction designers have chosen to reduce the set of admissible bids (for example, by limiting biddable combinations, or restricting the number of all-or-nothing bids a bidder may submit), or restricting the set of auction items that bidders can bid on to begin with. Some degree of freedom also exists as to what to do with bids whose constraints are binding: for example, in uniform price auctions to sell a fixed quantity, auctioneers have in the past chosen to reject bids whose minimum quantity was binding, even if including the bid lead to higher revenue. This choice was made in part because it reduced the computational burden of solving the auction, and in part because otherwise, bidders had an incentive to bid lower on a larger quantity and include a minimum execution size, hoping to be chosen over a potentially higher bid without a minimum execution size (which may have happened, depending on the volume and prices of the next lower bids).

As evident from the previous paragraph, allowing bidders in the previous example to include a minimum size restriction in their complex bids would imply that the hypothetical auctions to be solved become combinatorial uniform price auctions. As a result, clearing the overall auction with complex bids conditional on the quantity issued and conditions on minimum execution sizes would be correspondingly harder. Design choices may have to be made to guarantee tractability (much like may be necessary for standard uniform price combinatorial auctions), and these choices may include, as above, allowing minimum sizes to be expressed only in lots of a given size.

In general, the auctions of the present invention may be difficult to solve because they amount to solving a collection of hypothetical auctions which may already be hard to solve. It may be counter-intuitive to want to increase the level of difficulty of a theoretical problem that is already difficult to solve. The level of difficulty of each of the individual hypothetical auctions (and thus of the complex auction) will depend on the number of goods being auctioned off, the number of bidders, the number and kind of complex constraints that the bidders can and do submit, the interaction of these bids, and the clearing method chosen by the auctioneer. It is important to note, though, that an auction designer can choose the specifics complex auction mechanism in a way that is most appropriate for the specific application, while guaranteeing tractability of the complex auction.

In the following, a number of examples of complex auctions are described, in order to better illustrate the two steps 1. and 2. described above.

Consider the case in which one good is sold and bidders can submit bids conditional on there being at least some number of bids above a price P₁, or there being at least some number of bids in an interval [P₂,P₃]. In this case, the auctioneer would have to run auctions for the state of the world implied by the prices and minimum number of bids that the bidders specified in their conditions. For a specific state of the world, for example the state of the world in which the price is in [P₁,P₃] (which would imply that P₂<P1<P₃ above) and the number of bids is above n, the auctioneer may find that the corresponding set of valid bids does not in fact contain n bids in the interval [P₁,P₃]. If so, this state would not constitute and equilibrium. Instead, the auction process may find another equilibrium, associated with the state of the world in which the price is in the interval [P₁,P₃] and the number of bids is above n', where n'<n. The kind of complex bids in this example are bids of the third category, as these are conditions on simple statistics derived from the submitted bids. A similar example in this third complex bid category would be complex bids in a multi-unit auction that conditions on the average winning bid being in a certain interval, or above a cutoff. In this case, the auctioneer would start with a state of the world corresponding to some average, or an interval of the average, run a hypothetical uniform price auction in each of these states of the world and then select the best equilibrium found.

Next, an example of the fourth category could be the case in which bids are conditional on a variable, such as price impact. To start out with a simple case, consider a multiunit auction for some security. The auctioneer announces that he will use a uniform price format to sell some quantity Q of a security, that the objective is to maximize revenue, and that bidders are allowed to condition bids on price impact, namely by specifying that the price impact L per unit won (or on average over the units won) may be at most L* (where L* is some fraction of a cent, specified by the bidder). The term L, in reference to the Greek letter lambda is used, because conditioning on price impact is similar to conditioning on the depth of an auction, or on liquidity (where the term liquidity is generally referred to as lambda in the context of trading or double auctions). After collecting all the bids (complex and non complex bids), solving the auction amounts to considering different states of the world, distinguished by the price impact L that winning bids will have. For any state of the world L**, the set of valid, outstanding bids would comprise any non-complex bids, as well as all the complex bids that specify the price impact to be at most L*, with L*>L** (that is, these are all the bidders who would accept a price impact of up to L* for their orders, and therefore also accept the smaller price impact L**).

Having identified the valid bids, these bids are then ordered by price to recreate the demand curve for the state of the world in which L<L**. The price impact of a bid (in the state of the world L<L**), more precisely, the price impact of any unit won that is part of a winning bid, is now defined as: the difference between the price p that would clear the hypothetical auction for said state of the world, and the price p' that would clear said auction if the unit was removed from the set of winning bids, and the highest losing bid was instead included in the set of winning bids. Similarly, if bidders state the price impact condition for averages over units won, the price impact of a winning bid of some number n of units for a given bidder (which may be only a portion of the total quantity he bid on), would be calculated by taking the difference of the price when the winning bid is included and the price when the winning bid is replaced with the next n highest-priced units in the demand curve, and dividing that difference by n.

In order to solve the hypothetical auction for each state of the world L<L**, the auctioneer has to select what portion of the submitted bids will be winning, and may, for example, find that there is no collection of winning bids that is consistent with a price impact of L<L** for all of the winning bids. Intuitively, what the price impact condition captures is the shape of the demand curve to the right of the last winning unit. This information is important to bidders, especially if the good has common values or interdependent values features, so that the bidder's valuations depends on what valuations other bidders have for the good. Moreover it matters for bidders who plan to resell this good later (such as dealers bidding in a treasury bill auction, well knowing that they will be reselling the bills in the secondary market for on-the-run bills later). Conditioning on price impact allows bidders to "look" at the shape of that demand curve, and "see" as far (in terms of quantity), as they are buying quantity: that is, a bidder who bids on a larger quantity with a complex bid including a price impact condition, sees further than a bidder who submits a bid for a smaller quantity. More specifically, the price impact captures what happens as the demand curve, starting with the first losing bid at p, is shifted to the left by an amount equal to the units won (winning bid) by the bidder, and said demand curve intersects with the vertical line at Q at some new price p' (with Q being the total, fixed, quantity sold in the auction). That is, bidders are inherently prevented from gaming, as the only way to see more is by actually buying more units. The ability to see what the demand curve looks like may allow bidders to be less concerned with the winner's curse. In essence, they are able to submit bids that guarantee that they win more quantity only if the market is deep.

The problem of determining the set of winning bids in each state of the world L<L** is combinatorial, as the auctioneer has to decide on the best (highest revenue) way to choose Q winning units corresponding to some collection of winning bids (again, winning bids may only be a portion of the quantity associated with the submitted bid), and then choose the auction allocation and transfers associated with the state of the world in which the revenue is maximized.

Another way in which bidders can condition on price impact may be by including conditions stating that the price impact of a fixed quantity Q of units may not be more than L*. In this case, all winning bids would be able to "see" as far as Q down the demand curve in the associated state of the world. This kind of price impact condition may be useful in cases where the auctioneer wants to allow bidders to adjust their bids to the level of oversubscription of an auction, for example (as opposed to the previous case, in which the complex bid allowed bidders to protect themselves more from the winner's curse).

The complex bids with conditions on price impact can also be part of a double auction with uniform price format. Consider the first of the examples on price impact above: in a double auction the buyers may include conditions stating that L_{D}<L*, and the sellers may include conditions stating that L_{S}<L_{S}*, where L_{D} refers to the price impact on the demand side and L_{S} refers to the price impact on the supply side for each unit bought/sold. As a result, the states of the world that the auctioneer needs to consider are combinations of L_{D}** and L_{S}**, and then proceed from there as in the case of the auction above. Intuitively, the price impact conditions now allow buyers to "see" what happens, as the demand curve starting with the last losing bid at the intersection with the supply curve, is shifted to the left (by the amount of the units won) and intersects the supply curve at a new point p'. And it allows sellers to "see" what happens as the supply curve, starting with the last losing bid to sell, is shifted to the left (by the amount of the units won) and intersects the demand curve at a new point p'. Thus, the price impact captures the relative shapes of the demand and the supply curves.

Conditioning on price impact in double auctions, or in any trading mechanism, can be beneficial for traders by allowing them to be less concerned with the winner's curse and to trade more whenever the auction (or market) is liquid. In particular, consider the case in which auctions are run multiple times a day. Bidders may be concerned to bid aggressively in a given auction for fear that the price impact of their bid may be large if the auction is not deep.

In practice, there is ample evidence that traders choose to adjust the quantity they trade to the depth of the market. Traders choose to split larger orders into child orders, both across trading platforms and over time, as to reduce information leakage and the possibility of being front run. The child orders are then "small" with respect to the current amount of volume traded on each venue. Dynamic trading strategies such as VWAP algorithms (Volume Weighted Average Price), moreover calculate historical volume profiles for, say, an individual stock, and then work a larger order to buy (or sell) that stock dynamically over time, trying to buy (or sell) more when trading volume is higher (and thus price impact lower).

While order splitting is common, markets may be two-sided in many cases, in the sense that there is a significant interest to buy and sell, even if that liquidity is not visible on order books across trading venues. A double auction with complex bids conditioning on price impact would allow bidders not to have to be concerned with "moving first" and being front run: instead, the bidders could bid a price and have control over the associated price impact through the complex bid.

Next, It is important to mention an alternative way to reproduce a complex auction: rather than allowing bidders to condition their bids on the states of the world, the state of the world could be entered into the item definition of an otherwise standard auction. For example, instead of complex bids on item A, conditional on there being at least 5 other bids, the auctioneer could allow bids for the following two items: "item A when there are at least 5 bids for item A" and "item A when there are less than five bids for item A". Similarly, rather than allowing bidders in a multi-unit auction to condition their bid on the total trade quantity being above or below 1 million shares, bidders could submit bids for two different items: "shares that are sold as part of a total quantity of shares of 1 million or above", and "shares that are sold as part of a total quantity of shares of less than 1 million". In these two example auctions, the auctioneer would announce ex-ante that only one of the two different items would be sold. Solving the auction would involve the same steps of solving hypothetical auctions for the groups of refined states that correspond to the states of the world as defined by the items (much like in the standard definition of a complex auction, where the bids implicitly partitioned the set of refined states of the world that were relevant). Specifically, an auctioneer would run a hypothetical auction for each state of the world, using all the bids for items associated with said each state of the world (the hypothetical auction, for the state of the world in which over 1 million share are sold would thus use all the bids for the item "shares that are sold as part of a total quantity of shares of 1million or above"). This way of designing a complex auction is less intuitive, which is why the description of the invention is geared towards allowing for complex bids instead of "complex items".

Next, note that a complex auction mechanism may involve solving different types of auctions in different states of the world: for example, in a multiunit auction to sell a good, the auctioneer may specify that he will issue either a small or a large quantity and that a discriminatory price auction may be run in the state of the world in which the quantity is small, and a uniform price auction be run in the state of the world in which the quantity is large. The auctioneer (or mechanism designer), may also decide to run an auction in some states of the world, and match orders with a non-auction trading format in other states of the world, which would imply that the overall mechanism would be a complex trading mechanism, as opposed to a complex auction mechanism.

Finally it is useful to put the complex auction format in context to dynamic auctions that exist in the prior art. These auctions are run in a number of rounds, starting with the initial round, and ending in the final round, when the auction is terminated. In each round, there may be a set of current prices for the items to be sold (note that the items to be sold, for example, the quantity of a bond to be issued, may change over time). As the auction is run, the auctioneer communicates information back to the bidders, and usually allows the bidders to change their bids in every round. Bidders may submit bids for the current round, wherein the bids are dependent on information revealed in past rounds, and they may also submit bids that are to be valid in future rounds. The auction is started in the initial round and terminates in the final round when an equilibrium is reached (that is, when supply and demand are equated). Some of the dynamic auctions in the prior art try to mitigate the same problems that the complex bids in the first and second category try to mitigate. For example, bidder j could adjust his bids in each round in a way to prevent a specific bidder from winning a specific item.

The complex auctions in the present invention differ from dynamic rounds in two ways: first, the information communicated to the bidders in the rounds of a dynamic auctions will likely include information that is relevant to the state of the world that will be revealed once the auction terminates. For example, bidders in an auction may find out over the course of some rounds that there is a lot of competition and the auction is oversubscribed. In contrast, any information that represents a valid condition for a complex bid specifically has to be information that is not communicated through intra-auction information. Intuitively, in dynamic auctions, bidders have more options to adjust their bids to what they find out as the auction progresses. In contrast, bidders in complex auctions have to specify what they would do if they did find out something. Second, even if a dynamic auction was run in a completely automated way, and as a sealed bid auction (not allowing any bidder to change their bid in any round), the auction would remain, by construction, path dependent. That is, the dynamic auction starts at some point and end as soon as an equilibrium is reached. In particular, the decision to end the dynamic auction is made in some round n, which is currently being calculated, and the algorithm cannot "look into the future" and make a decision about whether or not to terminate the auction in said round n based on bids to be valid in future rounds after round n.

Sometimes, the equilibrium found in the dynamic auction would be the same that in a complex auction. If there is more than one equilibrium, though, there is no guarantee that the equilibrium found by the dynamic auction is the best equilibrium: it is just the equilibrium found first (on the path that was started in the initial round). The complex auction, on the other hand, would first identify the set of all equilibria (without even having to consider if they could be reached by a path of a dynamic auction) and then choose the best equilibrium in the set.

### Discussion of the Trading Mechanisms, Motivation

It is useful to point out the possible advantages of complex auctions. In practice, the fact that bidders anticipate the existence of different possible states of the world, such as "the auction is highly oversubscribed", and "the auction is undersubscribed", and the uncertainty that this signifies for bidders, complicates the choice of optimal bidding strategies. As a result, complex bids may reduce this difficulty and allow for simpler bidding.

Complex bids generally may benefit bidders also because they allow the bidders to differentiate between -and essentially exclude-, some auction results that they may find unfavorable, which in turn reduces some of the ex-ante uncertainty the bidders face along with the associated risk of exposure, which in turn may induce the bidders to bid with more confidence.

Said benefit may be especially pronounced if the goods have common values or interdependent values (in that a bidder's valuation for the good depends at least in part on what other bidder's valuations are), and bidders fear the winner's curse, and even more so if the bidders' uncertainty about the value of the goods is significant, so that the auction may suffer from lower volume.

Even for goods of pure private values, though, the complex bids may be attractive, when either more than one substitute good is auctioned off, or when a sequence of auctions Is run (such as a number of daily auctions for a stock) and liquidity in any given auction may vary (so that a large buyer may not know in which auction a large seller may be participating, or bidding aggressively). In particular, the present auction system would allow bidders to submit bids that are more aggressive the more liquid the specific substitute good was, or, in the case of a sequence of auctions, the more liquid a specific auction was. In both cases, the complex bids would implicitly allow bidders to guarantee that they buy/sell more whenever the liquidity/depth of the auction was higher. For the case of the sequence of auctions, the complex bids would also allow a large buyer and seller to "find" each other, and thus solve the sequential coordination problem of deciding in which auction to bid (by being able to bid on large quantities without having to fear significant price impact).

Other than sequential coordination problems, the complex bids may also help to mitigate more general coordination problems that arise In auctions, such in the example of two friends in a real estate auction who may want to buy houses that are adjacent to each other. Or, for example, a group of companies deciding which technology patents to buy, or which mall to buy together to develop it later.

Next, as explained above, clearing the auctions in the current inventions amounts to solving a number of hypothetical auctions (which may in turn represent combinatorial problems), and then choosing the result of one of the hypothetical auctions for which an equilibrium exists based on the submitted bids. In the context of game theory, this process parallels identifying the set of possible equilibria of a game, and then engaging in equilibrium selection, namely choosing the equilibria associated with the most beneficial outcome. In game theory, multiple equilibria exist for many games and this is usually not a desirable feature of the games, because players in the game may have no way of coordinating which equilibrium to choose (that is, they have no way of selecting an equilibrium) and may end up in an equilibrium unfavorable to all of them.

In practice, multiple equilibria may exist and matter, without there being an obvious way to selecting an equilibrium either (this is described in more detail below). Moreover, if multiple equilibria exist in the context of an auction that is to be run, these multiple equilibria may be reflected as the multiple equilibria found in the clearing process. Only that in this case, the auctioneer can in fact choose the most beneficial one (more precisely, the most beneficial equilibrium is chosen by the objective function specified in the clearing method). If so, the existence of, and choice over, multiple equilibria is precisely one of the advantages of the complex bids in the current invention.

Regarding multiple equilibria in practice, consider the following four examples. The first, maybe most classical example is that of a bank run, which (in simplified terms) can be thought of as a case in which two equilibria exist. One equilibrium: For fear that a distressed bank will collapse, all customers try to take their money out at the same time, so the bank collapses. Another equilibrium: customers of said bank generally believe that the bank will remain solvent, and the bank recovers from its difficult position in some time.

The second example is that of multiple equilibria in the context of systemic risk in a banking system, a problem that has garnered attention from regulators and academics in recent years. Given a system of interconnected banks, one could (again, simplifying) consider two states of the world/equilibria: one in which most or all banks fail (because banks are connected through lending relationships with each others, and/or by virtue of holding similar assets, whose prices are likely to have declined due to forced liquidations/fire sales by the distressed banks), and one in which all banks remain solvent. Choosing equilibria, as one would in the clearing process of an auction, is not possible in practice. Regulators instead work towards building confidence and avoiding the collapse of any systemically important financial institution.

The third example, that of gridlock in trading, is likely most closely related to applications of the auctions in the current invention. Trading volume and price discovery for a security may be -and remain- low, because buyers and sellers refrain from submitting bids or offers for large quantities given that the bids are bound to have large price impact due to the lack of depth, and the bidders may not be sure about the correct price for large quantities to begin with, due to the lack of price discovery. In this market, there may, though, also exist an equilibrium with liquidity, in which more volume is traded and price discovery is better, because, conditional on a large total trade quantity, bidders would be less concerned about the winners curse (being significantly off in their estimate of the correct price for the asset) and the price impact of their order, and submit bids that specified relatively larger quantities and more aggressive prices.

The problem in practice would then be how to move from one state of the world/equilibrium to the other. The market will be liquid if bidders bid on larger quantities, but that in turn is only likely to happen if markets are liquid- a chicken ad egg problem. In this case, a double auction in which bidders are allowed to include bids conditional on the volume traded may help: the clearing process would likely recover the equilibrium that is consistent with the gridlock (that is, and equilibrium in which total volume is low, and individual bid quantities conditional on that low volume are also small), and the other equilibrium in which liquidity is high (with larger bid quantities conditional on larger total volume traded). Being able to choose the liquid equilibrium over the one representing gridlock, may then kick start trading, improve volume, welfare for the participating bidders, as well as increase price discovery, compared to the pre-auction gridlock state.

As a fourth example one could think of a bar, which may be full, making it popular and attracting more people, and causing it to stay full. Or the bar may be mostly empty, making it unpopular, and not attracting anyone, thus staying mostly empty. Once in one of the equilibria, the bar will stay popular, or unpopular for a while, and moving from one equilibrium to the other (that is, selecting an equilibrium) may be difficult. Similarly, companies bidding for a slot at a industry fair may be more willing to bid at all, or bid higher, if they think that a lot of other companies will choose to go as well, so that the fair would be popular, likely attract more media coverage and make it worthwhile to invest the time and human resources to be represented at the fair. Organizers of fairs, or events may find complex auctions useful, knowing that in practice, it is usually much easier to sign on more clients when some other clients have already signed on.

Finally, the auctioneer's discretion at the clearing stage over the set of auction items to be sold may allow better control over variables that depend on the auction results, such as revenue or the auction price in a multiunit uniform price auction. Bidders in these auctions understand that the set of auction items sold is endogenous and may adjust their bids accordingly as a result. Nevertheless, having discretion over the items sold provides the auctioneer with an option that is similar to being able to simultaneously run a number of auctions in the prior art at once, each with a different set of auction items, and choosing the auction that has the best result. For example, specifying a uniform price clearing method and only a range for the total volume to be issued in a bond issuance, while allowing bidders to condition their bids on the total quantity issued, would be similar to running a uniform price auction for each quantity in the volume range and choosing the favorite auction (for example, the auction whose respective quantity had the highest revenue). Or, specifying a uniform price clearing method and a total of volume to be issued between two bonds A and B would be similar to running simultaneous auctions for every combination of volumes for bonds A and B that generate the targeted total volume, and choosing the favorite combination of volumes issued of each A and B.

In other words, giving an auctioneer choice over the set of items sold or bought at the completion of the auction may allow him to better adjust to circumstances he cannot foresee ex-ante. For example, a bond issuer may be able to take advantage of a higher than expected level of oversubscription by choosing an issuance volume towards the upper end of the range. Or, he may have better control over revenue raised by choosing the optimal combination of quantity issued and price. Or, if he is concerned about controlling the auction price, maybe because of the effect on a secondary market, he may choose a non-revenue maximizing, smaller quantity that prevents over-supply in the market and supports a target interest rate.

The following are further embodiments of the present technology:

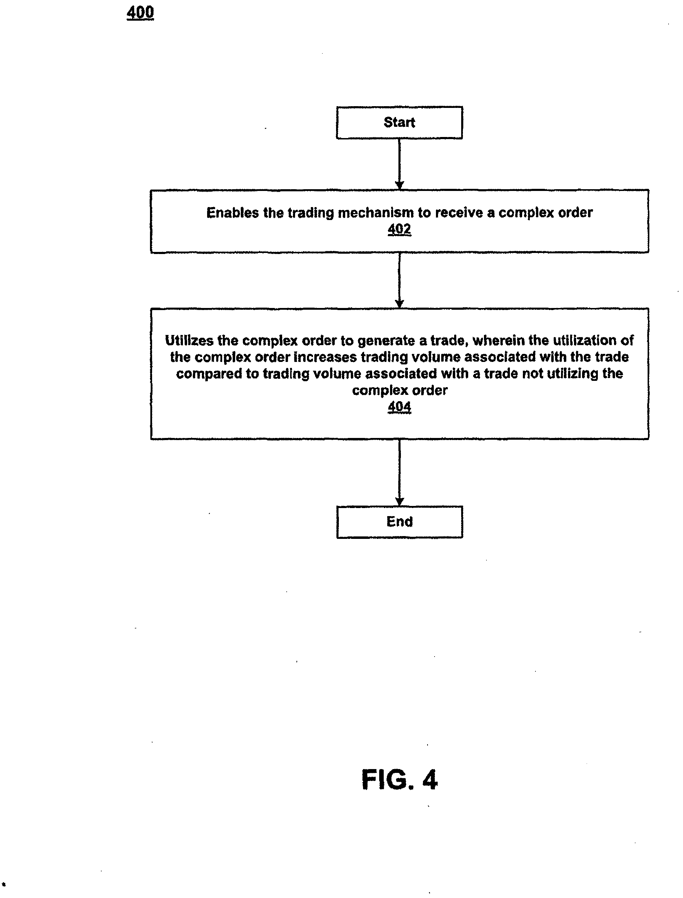

Referring to Figure 4, a method 400 for increasing trade volume in a trading mechanism, said method comprising:
enabling 402 said trading mechanism to receive a complex order; and
utilizing 404 said complex order to generate a trade, wherein the utilization of said complex order increases trading volume associated with said trade compared to trading volume associated with a trade not utilizing said complex order.

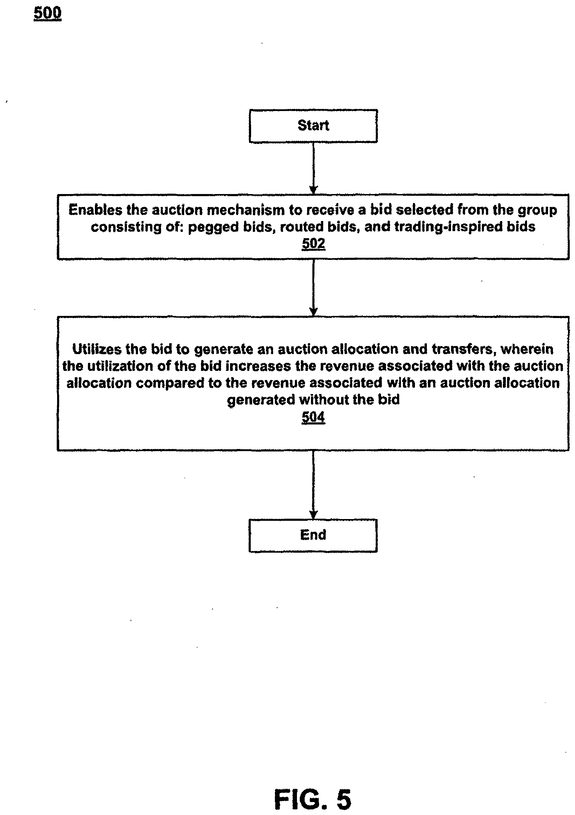

Referring to Figure 5, a method 500 for increasing auction revenue in an auction mechanism, said method comprising:
enabling 502 said auction mechanism to receive a bid selected from the group consisting of: pegged bids, routed bids, and trading-inspired bids; and
utilizing 504 said bid to generate an auction allocation and transfers, wherein the utilization of said bid increases the revenue associated with said auction allocation compared to the revenue associated with an auction allocation generated without said bid.

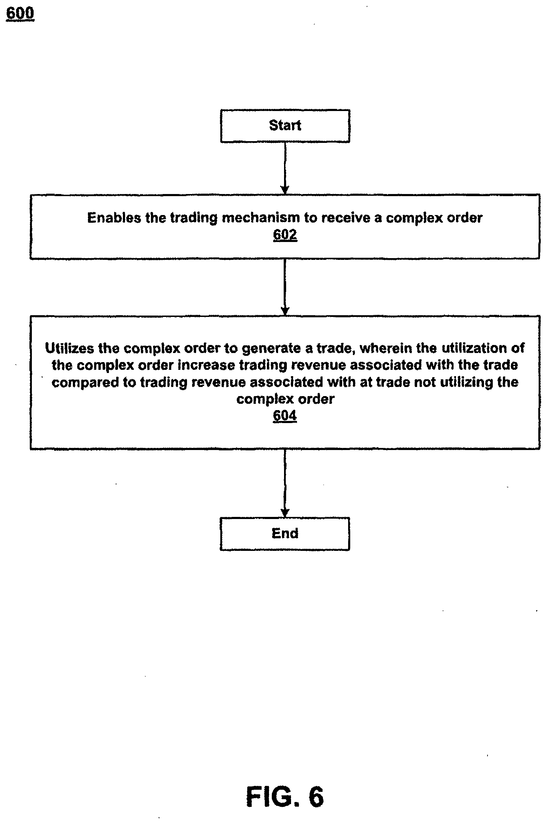

Referring to Figure 6, a method 600 for enhancing revenue in a trading mechanism, said method comprising:
enabling 602 said trading mechanism to receive a complex order; and
utilizing 604 said complex order to generate a trade, wherein the utilization of said complex order increases trading revenue associated with said trade compared to trading revenue associated with a trade not utilizing said complex order.

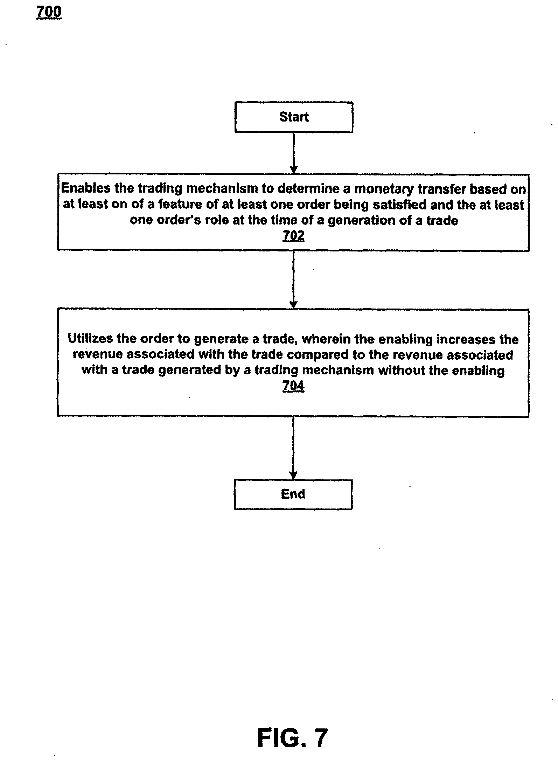

Referring to Figure 7, a method 700 for increasing revenue of a trading mechanism, said method comprising:
enabling 702 said trading mechanism to determine a monetary transfer based on at least one of a feature of at least one order being satisfied and said at least one order's role at the time of a generation of a trade; and
utilizing 704 said order to generate a trade, wherein said enabling increases the revenue associated with said trade compared to the revenue associated with a trade generated by a trading mechanism without said enabling.

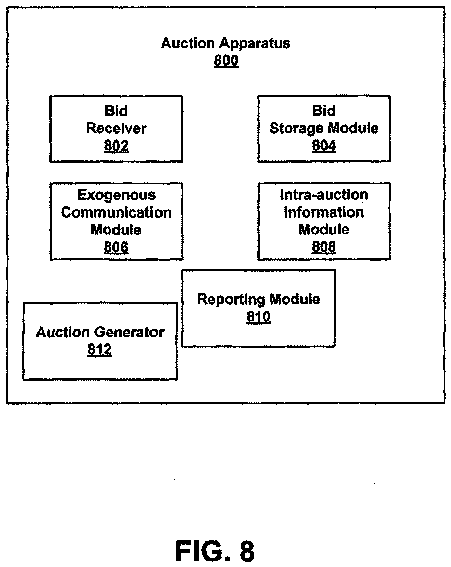

Referring to Figure 8, a auction apparatus 800 comprising:
a bid receiver 802 configured for receiving bids from at least one bidder, said bids comprising at least one pegged bid;
a bid storage module 804 configured for storing said bids;
an auction generator 812 configured for generating auction allocations and transfers based on said bids and an auction mechanism;
at least one of an exogenous communication module 806 configured for communicating with a data feed and an 808 intra-auction information module configured for reporting and generating intra-auction information based on said bids and said auction allocations and transfers;
and a reporting module 810 configured for reporting said auction allocation and transfers.

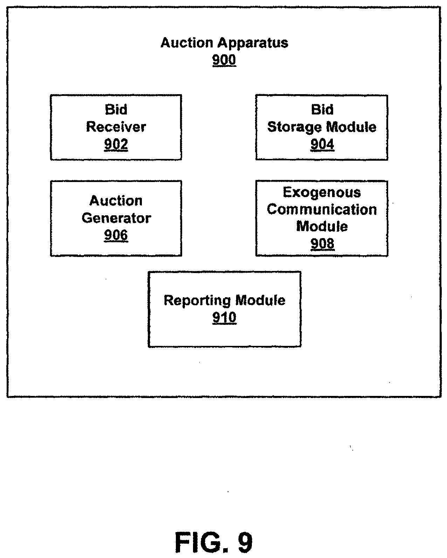

Referring to Figure 9, an auction apparatus 900 comprising:
a bid receiver 902 configured for receiving bids from at least one bidder, said bids comprising at least one routed bid;
a bid storage module 904 configured for storing said bids;
an auction generator 906 configured for generating auction allocations and transfers based on said bids and an auction mechanism;
an exogenous communication module 908 configured for communicating with at least one of a trading venue other than a trading venue comprising said auction apparatus;
and a reporting module 910 configured for reporting said auction allocation and transfers.

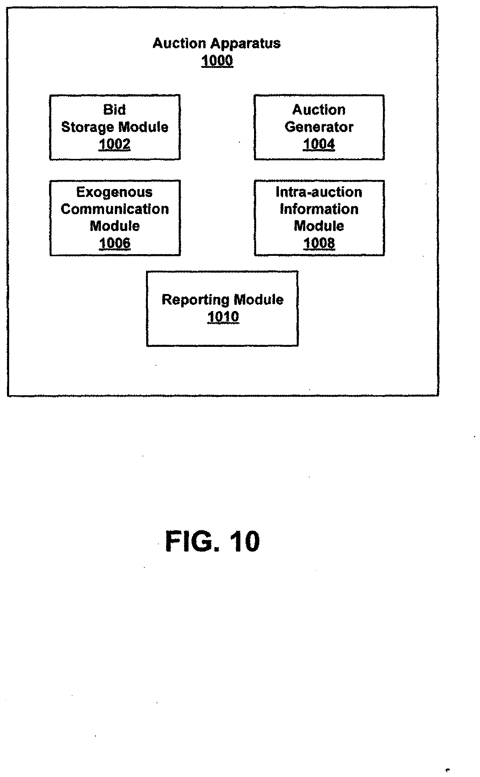

Referring to Figure 10, an auction apparatus 1000 comprising:
a bid receiver 1012 configured for receiving bids from at least one bidder, said bids comprising at least one trading-inspired bid;
a bid storage module 1002 configured for storing said bids;
an auction generator 1004 configured for generating auction allocations and transfers based on said bids and an auction mechanism;
at least one of an exogenous communication module 1006 configured for communicating with at least one of a trading venue other than a trading venue comprising said auction apparatus and a data feed, and an intra-auction information module 1008 configured for reporting and generating intra-auction information based on said bids and said allocations and transfers;
and a reporting module 1010 configured for reporting said auction allocation and transfers.

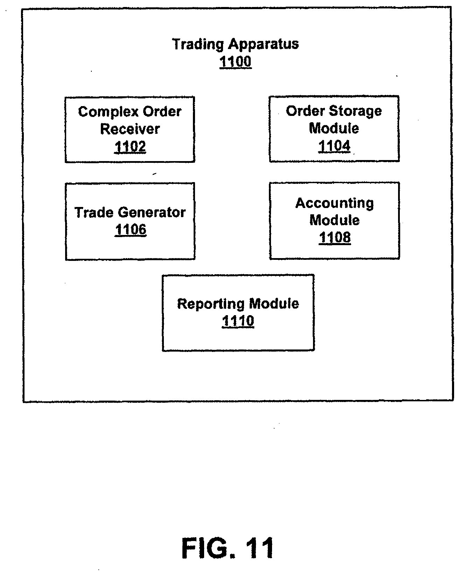

Referring to Figure 11, a trading apparatus 1100 comprising:
a complex order receiver 1102 configured for receiving at least one order from at least one trader;
an order storage module 1104 configured for storing said at least one order;
a trade generator 1106 configured for generating trades based on said at least one order and a trading mechanism;
an accounting module 1108 configured for determining a monetary transfer based on at least one of a feature of said at least one order being satisfied and said at least one order's role at a time of said generating trades; and
a reporting module 1110 configured for reporting said trades.

### Example Computer System Environment

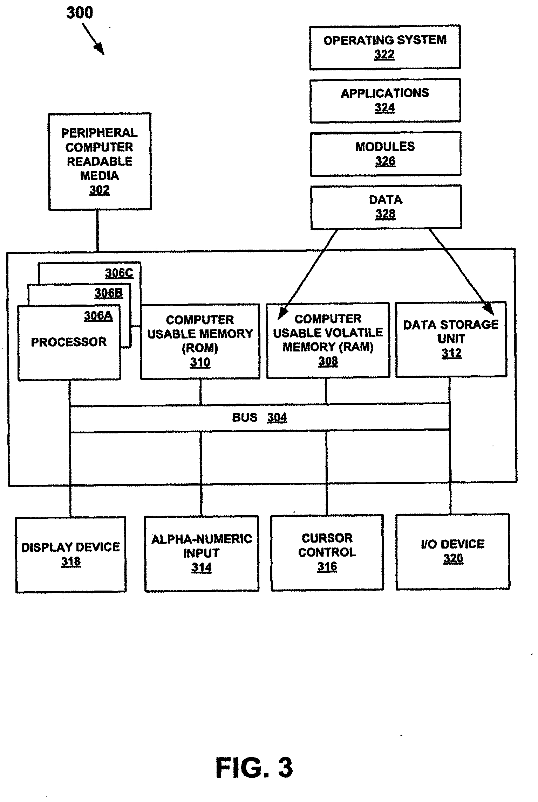

With reference now to Figure 3, portions of the technology for trading are composed of computer-readable and computer-executable instructions that reside, for example, in computer-readable storage media of a computer system. That is, Figure 3 illustrates one example of a type of computer that can be used to implement embodiments, which are discussed below, of the present technology.

Figure 3 illustrates an example computer system 300 used in accordance with embodiments of the present technology. It is appreciated that system 300 of Figure 3 is an example only and that the present technology can operate on or within a number of different computer systems including general purpose networked computer systems, embedded computer systems, routers, switches, server devices, user devices, various intermediate devices/artifacts, stand alone computer systems, and the like. As shown in Figure 3, computer system 300 of Figure 3 is well adapted to having peripheral computer readable media 302 such as, for example, a floppy disk, a compact disc, and the like coupled thereto.

System 300 of Figure 3 includes an address/data bus 304 for communicating information, and a processor 306A coupled to bus 304 for processing information and Instructions. As depicted in Figure 3, system 300 is also well suited to a multi-processor environment in which a plurality of processors 306A, 306B, and 306C are present. Conversely, system 300 is also well suited to having a single processor such as, for example, processor 306A. Processors 306A, 306B, and 306C may be any of various types of microprocessors. System 300 also includes data storage features such as a computer usable volatile memory 308, e.g. random access memory (RAM), coupled to bus 704 for storing information and instructions for processors 706A, 706B, and 706C.

System 300 also includes computer usable non-volatile memory 310, e.g. read only memory (ROM), coupled to bus 304 for storing static information and instructions for processors 306A, 306B, and 306C. Also present in system 300 is a data storage unit 312 (e.g., a magnetic or optical disk and disk drive) coupled to bus 304 for storing information and instructions. System 300 also includes an optional alphanumeric input device 314 including alphanumeric and function keys coupled to bus 304 for communicating information and command selections to processor 306A or processors 306A, 306B, and 306C. System 300 also includes an optional cursor control device 316 coupled to bus 304 for communicating user input information and command selections to processor 306A or processors 306A, 306B, and 306C. System 300 of the present embodiment also includes an optional display device 318 coupled to bus 304 for displaying information.

Referring still to Figure 3, optional display device 318 of Figure 3 may be a liquid crystal device, cathode ray tube, plasma display device or other display device suitable for creating graphic images and alphanumeric characters recognizable to a user. Optional cursor control device 316 allows the computer user to dynamically signal the movement of a visible symbol (cursor) on a display screen of display device 318. Many implementations of cursor control device 316 are known in the art including a trackball, mouse, touch pad, joystick or special keys on alpha-numeric input device 314 capable of signaling movement of a given direction or manner of displacement. Alternatively, it will be appreciated that a cursor can be directed and/or activated via input from alpha-numeric input device 314 using special keys and key sequence commands.

System 300 is also well suited to having a cursor directed by other means such as, for example, voice commands. System 300 also includes an I/O device 320 for coupling system 300 with external entities. For example, in one embodiment, I/O device 320 is a modem for enabling wired or wireless communications between system 300 and an external network such as, but not limited to, the internet. A more detailed discussion of the present technology is found below.

Referring still to Figure 3, various other components are depicted for system 300. Specifically, when present, an operating system 322, applications 324, modules 326, and data 328 are shown as typically residing in one or some combination of computer usable volatile memory 308, e.g. random access memory (RAM), and data storage unit 312. However, it is appreciated that in some embodiments, operating system 322 may be stored in other locations such as on a network or on a flash drive; and that further, operating system 322 may be accessed from a remote location via, for example, a coupling to the internet. In one embodiment, the present technology, for example, is stored as an application 324 or module 326 in memory locations within RAM 308 and memory areas within data storage unit 312. The present technology may be applied to one or more elements of described system 300. For example, a method for identifying a device associated with a transfer of content may be applied to operating system 322, applications 324, modules 326, and/or data 328.

The computing system 300 is only one example of a suitable computing environment and is not intended to suggest any limitation as to the scope of use or functionality of the present technology. Neither should the computing environment 300 be interpreted as having any dependency or requirement relating to any one or combination of components illustrated in the example computing system 300.

The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

All statements herein reciting principles, aspects, and embodiments of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. The scope of the present invention, therefore, is not intended to be limited to the exemplary embodiments shown and described herein. Rather, the scope and spirit of present invention is embodied by the appended claims.

All elements, parts and steps described herein are preferably included. It is to be understood that any of these elements, parts and steps may be replaced by other elements, parts and steps or deleted altogether as will be obvious to those skilled in the art.

### CONCEPTS

This writing has disclosed at least the following concepts.
Concept 1. A trading apparatus comprising:
   an order receiver configured for receiving orders from at least one trader, said orders comprising at least one complex order;
   an order storage module configured for storing said orders;
   a trade generator configured for generating trades based on said orders and a trading mechanism; and
   a reporting module configured for reporting said trades.
Concept 2. The trading apparatus of Concept 1, further comprising:
   an order manager configured for managing an event associated with said orders selected from the group consisting of:
   submission of said orders; amendment of said orders; cancelling of said orders; generating a set of valid outstanding orders; confirming a receipt of said orders; publishing of a portion of said orders; and a trade generated based on said orders.
Concept 3. The trading apparatus of Concept 1, further comprising:
   an intra-trade information module configured for reporting and generating intra-trade information based on at least one of said orders and said trades.
Concept 4. The trading apparatus of Concept 1, further comprising:
   an exogenous communication module configured for communicating with at least one of an exogenous trading venue and a data feed, said exogenous trading venue being one other than a trading venue comprising said trading apparatus.
Concept 5. The trading apparatus of Concept 4, wherein said exogenous communication module comprises:
   an order routing module configured for sending a portion of said orders to said exogenous trading venue; and
   an exogenous information accessor configured for accessing information from at least one of said exogenous trading venue and said data feed.
Concept 6. The trading apparatus of Concept 1, further comprising:
   a trading mechanism storage module configured for storing said trading mechanism.
Concept 7. The trading apparatus of Concept 6, wherein said trading mechanism storage module is configured to be accessible by said trade generator.
Concept 8. The trading apparatus of Concept 1, further comprising:
   a selectable order input form configured for being selected by said at least one trader.
Concept 9. The trading apparatus of Concept 8, wherein said selectable order input form is selected from the group of selectable order input forms consisting of:
   a sentence specifier; a mathematical condition specifier; a function specifier; a range specifier; and a trade objective of said at least one trader.
Concept 10. The trading apparatus of Concept 1, further comprising:
   a trade storage module configured for storing information associated with said trades.
Concept 11. The trading apparatus of Concept 1, further comprising:
   an instruction receiver configured for receiving trade reporting instructions.
Concept 12. The trading apparatus of Concept 1, wherein said trade generator comprises:
   a comparator configured for comparing stored orders with said trading mechanism; and
   a trade executor configured for executing said trades based on said comparing.
Concept 13. The trading apparatus of Concept 1, wherein said trade generator comprises:
   a clearing method module configured for executing a clearing method.
Concept 14. The trading apparatus of Concept 1, wherein said trading mechanism comprises:
   a clearing method.
Concept 15. The trading apparatus of Concept 14, wherein said clearing method comprises at least one of the following: a trading format, a trading objective and a tie breaker.
Concept 16. The trading apparatus of Concept 15, wherein said trading format utilized by said trading apparatus is selected from the group consisting of:
   a first price auction format; a second price auction format; a first price combinatorial auction format; a second price combinatorial auction format; a discriminatory price auction format; a uniform price auction format; a discriminatory price combinatorial auction format; a uniform price combinatorial auction format; and a combinatorial auction format.
Concept 17. The trading apparatus of Concept 15, wherein said trading format utilized by said trading apparatus is selected from the group consisting of:
   an exchange format; a trading format in which orders submitted consist only of quantities; NYSE Matchpoint; and platforms that send out intra-trading information that is partly based on orders currently in the system.
Concept 18. The trading apparatus of Concept 15, wherein the optimization of said trading objective involves the consideration of an effect of said generated trades on at least one criterion, said criterion selected from the group consisting of:
   auctioneer revenue; auctioneer cost; gains from trade; trade volume; maximizing auctioneer revenue; equity; dispersion; and price stability.
Concept 19. The trading apparatus of Concept 1, wherein said trading mechanism comprises:
   at least one trading rule associated with said trading mechanism.
Concept 20. The trading apparatus of Concept 19, wherein said at least one trading rule associated with said trading mechanism is selected from the group consisting of:
   rules regarding orders; rules regarding monetization; rules regarding a candidate set of items; and rules regarding when to clear a trade.
Concept 21. The trading apparatus of Concept 1, wherein each of said at least one complex order comprises:
   at least one complex condition and at least one condition that Is non-complex selected from the group consisting of:
   pegging conditions; routing conditions; trade-inspired conditions; a minimum execution size; and a bundle condition.
Concept 22. The trading apparatus of Concept 1, wherein said trading apparatus operates in at least one round of a dynamic auction.
Concept 23. The trading apparatus of Concept 1, wherein said orders are for items selected from the group consisting of:
   public sector bonds, private sector bonds; bills; notes; stocks; exchange traded funds; derivatives; options; credit default swaps, variance swaps; commodities; power; oil drilling rights; emission allowances; emission credits; real estate; online advertising spots; patents; spectrum licenses; airport landing spots; data capacity; other tangible goods; and other intangible goods.
Concept 24. The trading apparatus of Concept 1, wherein said trading apparatus is configured for operation in a rich setting.
Concept 25. The trading apparatus of Concept 1, wherein said order receiver is configured for receiving at least one complex order having a condition selected from the group of condition categories consisting of:
   items bought; items sold; the auction allocation and transfers; statistics derived from information contained in said orders; variables whose calculation requires utilizing at least some information included in said orders; item-less trades; features of orders matched with said at least one complex order; and impact on intra-trade information.
Concept 26. The trading apparatus of Concept 1, wherein said order receiver is configured for receiving said at least one complex order having a condition on a variable that captures a concept selected from the group consisting of:
   price impact of an order, auction depth; market depth; liquidity; oversubscription; level of competition; equity; dispersion; supply-demand-imbalance; stability; and momentum.
Concept 27. A non-transitory computer-readable storage medium comprising instructions stored thereon which, when executed by a computer system, cause said computer system to perform a trading method, said trading method comprising:
   receiving orders from at least one trader, wherein said orders comprise at least one complex order;
   storing said orders;
   generating trades based on said orders and a trading mechanism; and
   reporting said trades.
Concept 28. The trading method of Concept 27, further comprising:
   managing an event associated with said orders selected from a group of events consisting of:
   submission of said orders; amendment of said orders; cancellation of said orders; generation of a set of valid outstanding orders; confirmation of a receipt of said orders; publication of a portion of said orders; and a trade generated based on said orders.
Concept 29. The trading method of Concept 27, further comprising:
   generating and reporting intra-trade information based on at least one of said orders and said trades.
Concept 30. The trading method of Concept 27, further comprising:
   communicating with at least one of an exogenous trading venue and a data feed, said exogenous trading venue being one other than a trading venue comprising said trading apparatus.
Concept 31. The trading method of Concept 30, wherein said communicating comprises:
   sending a portion of said orders to said exogenous trading venue; and
   accessing information from at least one of said trading venue and said data feed.
Concept 32. The trading method of Concept 27, further comprising:
   storing said trading mechanism.
Concept 33. The trading method of Concept 27, further comprising:
   receiving a selection of a selectable order input by said at least one trader.
Concept 34. The trading method of Concept 27, further comprising:
   storing information associated with said trades.
Concept 35. The trading method of Concept 27, further comprising:
   receiving trade reporting instructions.
Concept 36. The trading method of Concept 27, wherein said generating trades based on said orders and a trading mechanism comprises:
   comparing stored orders with said trading mechanism; and
   executing said trades based on said comparing.
Concept 37. The trading method of Concept 27, wherein said generating trades based on said orders and a trading mechanism comprises:
   executing a clearing method.
Concept 38. The trading method of Concept 27, wherein said reporting said trades comprises:
   reporting said trades to said at least one trader.
Concept 39. The trading method of Concept 27, wherein said method comprises operating in at least one round of a dynamic auction.
Concept 40. The trading method of Concept 27, wherein said method comprises operating in a rich setting.
Concept 41. A computer-implemented method comprising:
   receiving at least one complex order from at least one trader;
   storing said at least one complex order;
   generating trades based on said at least one complex order and a trading mechanism; and
   reporting said trades.
Concept 42. The method of Concept 41, further comprising:
   managing an event associated with said orders selected from a group of events consisting of:
   submission of said orders; amendment of said orders; cancellation of said orders; generation of a set of valid outstanding orders; confirmation of a receipt of said orders; publication of a portion of said orders; and a trade generated based on said orders.
Concept 43. The trading method of Concept 41, further comprising:
   reporting and generating intra-trade information based on at least one of said orders and said trades.
Concept 44. The trading method of Concept 41, further comprising:
   communicating with at least one of a trading venue, said trading venue being one other than a trading venue comprising said trading apparatus, and a data feed.
Concept 45. The trading method of Concept 44, wherein said communicating comprises:
   sending a portion of said orders to said trading venue; and
   accessing information from at least one of said trading venue and said data feed.
Concept 46. The trading method of Concept 41, further comprising:
   storing said trading mechanism.
Concept 47. The trading method of Concept 41, further comprising:
   receiving a selection of a selectable order input from by said at least one trader.
Concept 48. The trading method of Concept 41, further comprising:
   storing information associated with said trades.
Concept 49. The trading method of Concept 41, further comprising:
   receiving trade reporting instructions.
Concept 50. The trading method of Concept 41, wherein said generating trades based on said orders and a trading mechanism comprises:
   comparing stored orders with said trading mechanism; and
   executing said trades based on said comparing.
Concept 51. The trading method of Concept 41, wherein said generating trades based on said orders and a trading mechanism comprises:
   executing a clearing method.
Concept 52. The trading method of Concept 41, wherein said method comprises operating in at least one round of a dynamic auction.
Concept 53. The trading method of Concept 41, wherein said method comprises operating in a rich setting.
Concept 54. A method for increasing trade volume in a trading mechanism, said method comprising:
   enabling said trading mechanism to receive a complex order; and
   utilizing said complex order to generate a trade, wherein the utilization of said complex order increases trading volume associated with said trade compared to trading volume associated with a trade not utilizing said complex order.
Concept 55. A method for increasing auction revenue in an auction mechanism, said method comprising:
   enabling said auction mechanism to receive a bid selected from the group consisting of: pegged bids, routed bids, and trading-inspired bids; and
   utilizing said bid to generate an auction allocation and transfers, wherein the utilization of said bid increases the revenue associated with said auction allocation compared to the revenue associated with an auction allocation generated without said bid.
Concept 56. A method for enhancing revenue in a trading mechanism, said method comprising:
   enabling said trading mechanism to receive a complex order; and
   utilizing said complex order to generate a trade, wherein the utilization of said complex order increases trading revenue associated with said trade compared to trading revenue associated with a trade not utilizing said complex order.
Concept 57. A method for increasing revenue of a trading mechanism, said method comprising:
   enabling said trading mechanism to determine a monetary transfer based on at least one of a feature of at least one order being satisfied and said at least one order's role at the time of a generation of a trade; and
   utilizing said order to generate a trade, wherein said enabling increases the revenue associated with said trade compared to the revenue associated with a trade generated by a trading mechanism without said enabling.
Concept 58. An auction apparatus comprising:
   a bid receiver configured for receiving bids from at least one bidder, said bids comprising at least one pegged bid;
   a bid storage module configured for storing said bids;
   an auction generator configured for generating auction allocations and transfers based on said bids and an auction mechanism;
   at least one of an exogenous communication module configured for communicating with a data feed and an intra-auction information module configured for reporting and generating intra-auction information based on said bids and said auction allocations and transfers;
   and a reporting module configured for reporting said auction allocation and transfers.
Concept 59. An auction apparatus comprising:
   a bid receiver configured for receiving bids from at least one bidder, said bids comprising at least one routed bid;
   a bid storage module configured for storing said bids;
   an auction generator configured for generating auction allocations and transfers based on said bids and an auction mechanism;
   an exogenous communication module configured for communicating with at least one of a trading venue other than a trading venue comprising said auction apparatus;
   and a reporting module configured for reporting said auction allocation and transfers.
Concept 60. An auction apparatus comprising:
   a bid receiver configured for receiving bids from at least one bidder, said bids comprising at least one trading-inspired bid;
   a bid storage module configured for storing said bids;
   an auction generator configured for generating auction allocations and transfers based on said bids and an auction mechanism;
   at least one of an exogenous communication module configured for communicating with at least one of a trading venue other than a trading venue comprising said auction apparatus and a data feed, and an intra-auction information module configured for reporting and generating intra-auction Information based on said bids and said allocations and transfers;
   and a reporting module configured for reporting said auction allocation and transfers.
Concept 61. A trading apparatus comprising:
   a complex order receiver configured for receiving at least one order from at least one trader;
   an order storage module configured for storing said at least one order;
   a trade generator configured for generating trades based on said at least one order and a trading mechanism;
   an accounting module configured for determining a monetary transfer based on at least one of a feature of said at least one order being satisfied and said at least one order's role at a time of said generating trades; and
   a reporting module configured for reporting said trades.

## Claims

1. A trading computer system that allows for the coordinated execution of orders while requiring less data traffic,
having a trading mechanism that comprises:
a message space that defines admissible orders and defines at least one conditioning variable that at least one admissible order may reference, and
a clearing method designed for matching admissible submitted orders from multiple traders at the clearing of said orders,
said computer system comprising:
a) at least one selectable order input form that allows at least one first trader among said multiple traders to submit admissible orders,
wherein said admissible submitted orders comprise at least one admissible order that comprises at least one nonzero price and belongs to the group of either multi-unit orders, multi-item orders, or a combination of multi-unit orders and multi-item orders, and that is complex;
wherein a given admissible order is complex if it comprises at least one complex condition,
wherein, given said trading mechanism, a condition comprised in an admissible order submitted by said first trader is complex if:
it is a condition on at least one conditioning variable; and
for at least one set of orders in the set of admissible orders from traders other than the at least one first trader,
whether said condition is met at a clearing of said admissible order:
(i) cannot be determined knowing only the information contained in the first group comprising:
- said at least one first trader's allocation and transfers in said clearing;
- said at least one first traders own order history up until the time of said clearing;
- the time of said clearing;
- the history, up until the time of said clearing, of exogenous variables on which said admissible order submitted by said first trader depends;
- the history of trades up until the time of said clearing, excluding information about the trade allocation and transfers in said clearing; and
- the history of intra-trade information available to said at least one first trader in said trading mechanism up until the time of said clearing, excluding information about the trade allocation and transfers in said clearing;
(ii) can be determined given the information contained in the second group comprising:
-- the trade allocation and transfers in said clearing, and
-- the entirety of trading mechanism information up until the time of said clearing;
b) an order receiver that receives admissible submitted orders,
c) an order storage module configured for storing said admissible submitted orders;
d) a trade generator configured for generating trades based on said admissible submitted orders and said trading mechanism;
wherein the trade generation involves using said clearing method to choose a trade at said clearing,
wherein said generated trade is associated with the realization of the at least one conditioning variable at the clearing in which said generated trade is chosen,
wherein orders that have conditions unmet at the realization of the at least one referenced conditioning variable at said clearing receive zero allocations in said generated trade;
wherein a price or prices corresponding to a generated trade allocation and transfers, for an item or items on which said at least one admissible complex order submitted by said at least one first trader was submitted, are determined endogenously; and
e) a reporting module configured for reporting said trades.

2. The trading computer system of claim 1, wherein:
said admissible complex orders that said selectable order input form allows said first trader to submit,
comprise at least one complex order that comprises a complex condition such that moreover:
for at least one set of orders in the set of admissible orders from traders other than said first trader,
whether said complex condition is met at a clearing of said admissible complex order,
cannot be determined knowing only the information contained in the first group and in the trade allocation and/ or transfers in said clearing.

3. The trading computer system of claim 1, wherein at least one of:
said trading computer system supports orders for single items;
said trading computer system supports item-less orders;
said order receiver is configured for receiving at least one complex order comprising a condition on at least one conditioning variable that contains information, at the clearing of said order, about: items bought; items sold; the trade allocation and transfers; statistics derived from information contained in said admissible submitted orders; variables whose calculation requires utilizing at least some information included in said admissible submitted orders; item-less trades;
features of orders from other traders that are matched with said order, and impact on intra-trade information; and
said order receiver is configured for receiving at least one complex order comprising a condition on at least one conditioning variable that captures a concept selected from the group consisting of: price impact of an order; auction depth; market depth; liquidity; over subscription; level of competition; equity; dispersion; supply imbalance; stability; and momentum.

4. The trading computer system of any of the preceding claims, further comprising at least one of the following:
an order manager configured for managing an event associated with said admissible orders selected from the group consisting of submission of said admissible orders; amendment of said admissible submitted orders; cancelling of said admissible submitted orders; generating a set of valid outstanding orders; confirming a receipt of said admissible submitted orders; publishing of a portion of said admissible submitted orders; and a trade generated based on said admissible submitted orders;
an intra-trade information module configured for reporting and generating intra-trade information based on at least one of said admissible submitted orders and said trades;
a trade storage module configured for storing information associated with said trades;
an instruction receiver configured for receiving trade reporting instructions; a trade executor configured for executing said trades based on said comparing;
a trading mechanism storage module configured for storing said trading mechanism; and
an exogenous communication module configured for communicating with at least one of an exogenous trading venue and a data feed, said exogenous trading venue being one other than a trading venue comprising said trading computer system.

5. The trading computer system of any of Claims 1 to 3, comprising an exogenous communication module configured for communicating with at least one of an exogenous trading venue and a data feed, said exogenous trading venue being one other than a trading venue comprising said trading computer system, wherein said exogenous communication module comprises:
an order routing module configured for sending a portion of said admissible submitted orders to said exogenous trading venue; and
an exogenous information accessor configured for accessing information from at least one of said exogenous trading venue and said data feed.

6. The trading computer system of any of Claims 1 to 3 or 5, further comprising a trading mechanism storage module configured for storing said trading mechanism, wherein said trading mechanism storage module is configured to be accessible by said trade generator.

7. The trading computer system of Claim 1, wherein said selectable order input form is selected from the group of selectable order input forms consisting of: a sentence specifier; a mathematical condition specifier; a function specifier; a range specifier; and a trade objective of said at least one trader.

8. The trading computer system of Claim 1, wherein said clearing method comprises at least one of the following:
a trading format, a trading objective, and a tie breaker.

9. The trading computer system of Claim 9, wherein:
said trading format utilized by said trading computer system is one of: a first price auction format; a second price auction format; a first price combinatorial auction format; a second price combinatorial auction format; a discriminatory price auction format; a uniform price auction format; a discriminatory price combinatorial auction format; a uniform price combinatorial auction format; a double auction format; and a combinatorial auction format;
an exchange format; a trading format in which orders submitted consist only of quantities; NYSE Matchpoint; and platforms that send out intra-trading information that is partly based on orders currently in the system;
and/or the optimization of said trading objective involves the consideration of an effect of said generated trades on at least one criterion, said criterion selected from the group consisting of: auctioneer revenue; auctioneer cost; gains from trade; trade volume; equity; dispersion; and price stability.

10. The trading computer system of any of the preceding claims, wherein said trading mechanism comprises:
at least one trading rule associated with said trading mechanism.

11. The trading computer system of Claim 10, wherein said at least one trading rule associated with said trading mechanism is selected from the group consisting of:
rules regarding orders;
rules regarding monetization;
rules regarding a candidate set of items; and
rules regarding when to clear a trade.

12. The trading computer system of any of the preceding claims, wherein at least one of:
said trade generator comprises a comparator configured for comparing stored admissible submitted orders with said trading mechanism, and a trade executor configured for executing said trades based on said comparing;
said trade generator comprises a clearing method module configured for executing a clearing method;
said admissible orders comprise a complex order that comprises at least one complex condition and at least one non-complex condition selected from the group consisting of: pegging conditions; routing conditions; trade-inspired conditions; a minimum execution size; and a bundle condition;
said trading computer system operates in at least one round of a dynamic auction;
said admissible orders comprise orders for items selected from the group consisting of: public sector bonds, private sector bonds; bills; notes; stocks; exchange traded funds; derivatives; options; credit default swaps, variance swaps; commodities; power; oil drilling rights; emission allowances; emission credits; real estate; online advertising spots; patents; spectrum licenses; airport landing spots; data capacity; other tangible goods; and other intangible goods; and
said trading computer system is configured for operation in a rich setting.

13. A trading computer system according to any of the preceding claims, further comprising:
an accounting module configured for determining a monetary transfer based on at least one of:
a feature of at least one admissible submitted order being satisfied, and
said at least one order's role at a time of said generating trades.

14. A non-transitory computer-readable storage medium comprising instructions stored thereon which, when executed by a computer system, cause said computer system to perform a trading method,
allowing for the coordinated execution of orders while requiring less data traffic, said trading method comprising:
a) providing a trading mechanism that comprises:
a message space that defines admissible orders and defines at least one conditioning variable that at least one admissible order may reference, and
a clearing method designed for matching admissible submitted orders from multiple traders at the clearing of said orders,
b) providing at least one selectable order input form that allows at least one first trader among said multiple traders to submit admissible orders,
wherein said admissible submitted orders comprise at least one admissible order that comprises at least one nonzero price and belongs to the group of either multi-unit orders, multi-item orders, or a combination of multi-unit orders and multi-item orders, and that is complex;
wherein a given admissible order is complex if it comprises at least one complex condition,
wherein, given said trading mechanism, a condition comprised in an admissible order submitted by said first trader is complex if:
it is a condition on at least one conditioning variable; and
for at least one set of orders in the set of admissible orders from traders other than the at least one first trader,
whether said condition is met at a clearing of said admissible order:
(i) cannot be determined knowing only the information contained in the first group comprising:
- said at least one first trader's allocation and transfers in said clearing;
- said at least one first traders own order history up until the time of said clearing;
- the time of said clearing;
- the history, up until the time of said clearing, of exogenous variables on which said admissible order submitted by said first trader depends;
- the history of trades up until the time of said clearing, excluding information about the trade allocation and transfers in said clearing; and
- the history of intra-trade information available to said at least one first trader in said trading mechanism up until the time of said clearing, excluding information about the trade allocation and transfers in said clearing;
(ii) can be determined given the information contained in the second group comprising:
-- the trade allocation and transfers in said clearing, and
--the entirety of trading mechanism information up until the time of said clearing;
c) receiving admissible submitted orders;
d) storing said admissible submitted orders;
e) generating trades based on said admissible submitted orders and said trading mechanism;
wherein said generating trades involves using said clearing method to choose a trade at said clearing,
wherein said generated trade is associated with the realization of the at least one conditioning variable at the clearing in which said generated trade is chosen,
wherein orders that have conditions unmet at the realization of the at least one referenced conditioning variable at said clearing receive zero allocations in said generated trade;
wherein a price or prices corresponding to a generated trade allocation and transfers, for an item or items on which said at least one admissible complex order submitted by said at least one first trader was submitted, are determined endogenously; and
f) reporting said trades.
